# EUROPEAN PATENT APPLICATION

(11) **EP 4 261 924 A1**
(43) Date of publication of application: **18.10.2023**
(21) Application number: 21962760.1
(22) Date of filing: 29.12.2021
(51) Int. Cl.: H01M 4/13, H01M 50/40, H01M 10/0525

(54) **FLUORINE-FREE INSULATING SLURRY, POSITIVE ELECTRODE SHEET, SECONDARY BATTERY, BATTERY MODULE, BATTERY PACK, AND ELECTRICAL DEVICE**

(71) Applicant: Contemporary Amperex Technology Co., Limited, Ningde City, Fujian 352100 (CN)
(72) Inventor: AI, Shaohua, Ningde Fujian 352100 (CN); SUN, Chengdong, Ningde Fujian 352100 (CN); ZHENG, Yi, Ningde Fujian 352100 (CN)
(74) Representative: Herrmann, Uwe
(86) International application number: PCT/CN2021/142436
(87) International publication number: WO 2023/123038

(57) **Abstract**

The present application provides a fluorine-free insulating slurry, a positive electrode sheet, a secondary battery, a battery module, a battery pack and an electrical apparatus, and the fluorine-free insulating slurry comprises a first resin, a second resin, an inorganic filler and an organic solvent, wherein the first resin is selected from resins with a glass transition temperature of above 80°C and a liquid absorbency in a standard electrolyte solution of below 15%, and the second resin is selected from resins with a glass transition temperature of below -5°C. The present application can simultaneously improve the coating speed of the insulating slurry, the processability of the positive electrode sheet and the safety performance of the secondary battery.

## Description

### Technical Field

The present application falls within the technical field of batteries, and in particular to a fluorine-free insulating slurry, a positive electrode sheet, a secondary battery, a battery module, a battery pack and an electrical apparatus.

### Background Art

In recent years, secondary batteries have been widely used in energy storage power source systems such as water power, thermal power, wind power and solar power stations, as well as power tools, electric bicycles, electric motorcycles, electric vehicles, military equipment, aerospace and other fields. With the application and promotion of the secondary battery, more and more attention has been paid to its safety. If the safety of the secondary battery cannot be guaranteed, the secondary battery cannot be used. Therefore, how to enhance the safety performance of the secondary batteries is an urgent technical problem to be solved at present.

### Summary of the Invention

The objective of the present application is to provide a fluorine-free insulating slurry, a positive electrode sheet, a secondary battery, a battery module, a battery pack and an electrical apparatus, aiming to simultaneously improve the coating speed of the insulating slurry, the processability of the positive electrode sheet and the safety performance of the secondary battery.

A first aspect of the present application provides a fluorine-free insulating slurry, comprising a first resin, a second resin, an inorganic filler and an organic solvent, wherein the first resin is selected from resins with a glass transition temperature of above 80°C and a liquid absorbency in a standard electrolyte solution of below 15%, and the second resin is selected from resins with a glass transition temperature of below -5°C.

The technical solution of the fluorine-free insulating slurry of the present application is capable of effectively suppressing or even eliminating the formation of a fusion zone, thereby fundamentally solving the problem of restricted increase in coating speed; and the technical solution of the fluorine-free insulating slurry of the present application can also ensure the high energy density of the secondary battery. The insulating coating prepared from the fluorine-free insulating slurry of the present application is capable of having high mechanical strength, high heat resistance, high insulativity, high adhesion, high toughness and excellent electrolyte solution resistance at the same time, and even when the negative electrode active material layer pierces the separator and contacts the positive electrode sheet due to foreign matter, burrs, etc., the insulating coating can prevent the direct contact between the negative electrode active material layer and the positive electrode current collector, thereby ensuring the high safety performance of the secondary battery. In addition, the fluorine-free insulating slurry of the present application is capable of ensuring that the positive electrode sheet prepared therefrom has a good processability, a low breakage rate, and a high quality product rate.

In any embodiment of the present application, based on the total mass of the fluorine-free insulating slurry, the percentage mass content w1 of the first resin is 1% to 5%, the percentage mass content w2 of the second resin is 2% to 10%, the percentage mass content w3 of the inorganic filler is 15% to 30%, and the percentage mass content w4 of the organic solvent is 55% to 82%. By reasonably adjusting the percentage mass contents of the first resin, the second resin, the inorganic filler and the organic solvent, the formation of the fusion zone is capable of being effectively suppressed while the coating speed is remarkably improved, and also it can ensure that the positive electrode sheet thus prepared has an excellent processability, a lower breakage rate and a higher quality product rate. In addition, the insulating coating thus obtained has high mechanical strength, high heat resistance, high insulativity, high adhesion, high toughness and excellent electrolyte solution resistance at the same time, and the secondary battery using the insulating coating can have good electrochemical performance as well as higher safety performance.

In any embodiment of the present application, w1/w2 is 0.1 to 1.5. Optionally, w1/w2 is 0.2 to 1.0. When w1/w2 is in an appropriate range, the toughening effect of the second resin on the first resin and the reinforcing effect of the first resin on the second resin can be fully exerted, so that the insulating coating has high adhesion, high toughness and excellent electrolyte solution resistance at the same time, the positive electrode sheet has a lower breakage rate and a higher quality product rate, and the secondary battery has higher safety performance.

In any embodiment of the present application, (w1+w2)/w3 is 0.1 to 0.9. Optionally, (w1+w2)/w3 is 0.2 to 0.7. When (w1+w2)/w3 is in a suitable range, the insulating coating has high mechanical strength, high heat resistance, high insulativity and high adhesion at the same time, and even when the negative electrode active material layer pierces the separator and contacts the positive electrode sheet due to foreign matter, burrs, etc., the direct contact between the negative electrode active material layer and the positive electrode current collector can be prevented, thereby ensuring the higher safety performance of the secondary battery.

In any embodiment of the present application, the viscosity of the fluorine-free insulating slurry at 25°C is 1000 cps to 20000 cps. Optionally, the viscosity of the fluorine-free insulating slurry at 25°C is 2000 cps to 8000 cps.

In any embodiment of the present application, the glass transition temperature of the first resin is 80°C to 350°C.

In any embodiment of the present application, the glass transition temperature of the second resin is -60°C to -5°C.

In any embodiment of the present application, the number average molecular weight of the first resin is 10000 to 500000.

In any embodiment of the present application, the number average molecular weight of the second resin is 10000 to 1000000.

In any embodiment of the present application, the first resin is selected from at least one of polyimide resin, polyamideimide resin, polyamic acid resin, polyacrylamide resin, polyacrylonitrile resin, acrylate resin, acrylamide-acrylonitrile copolymer resin and acrylamide-acrylonitrile-acrylate copolymer resin.

In any embodiment of the present application, the second resin is selected from at least one of hydrogenated nitrile-butadiene rubber, hydrogenated natural rubber, acrylate resin, hydrogenated styrene-butadiene-styrene copolymer resin, hydrogenated styrene-isoprene-styrene copolymer resin, hydrogenated styrene-ethylene-butylene-styrene copolymer resin, hydrogenated styrene-ethylene-propylene-styrene copolymer resin, hydrogenated styrene-ethylene-butadiene-styrene copolymer resin, vinyl acetate-ethylene copolymer resin, vinyl acetate-acrylate copolymer resin, acrylate-ethylene copolymer resin, and vinyl acetate-ethylene-acrylate copolymer resin.

Combining the above-mentioned first resin and second resin is capable of giving full play to the excellent electrolyte solution resistance of the first resin and the flexibility of the second resin, and giving full play to the toughening effect of the second resin on the first resin and the reinforcing effect of the first resin on the second resin. Under the synergistic effect of the two, the insulating coating has high insulativity, high adhesion and excellent electrolyte solution resistance at the same time, and the positive electrode sheet has a lower breakage rate and a higher quality product rate.

In any embodiment of the present application, the inorganic filler includes at least one of inorganic insulating oxides, inorganic insulating nitrides, inorganic insulating carbides, silicates, aluminosilicates, carbonates, and molecular sieves.

In any embodiment of the present application, the inorganic insulating oxide includes at least one of alumina, boehumite, titanium dioxide, silicon dioxide, zirconium dioxide, magnesium oxide, calcium oxide, beryllium oxide, and spinel.

In any embodiment of the present application, the inorganic insulating nitride includes at least one of boron nitride, silicon nitride, aluminum nitride, and titanium nitride.

In any embodiment of the present application, the inorganic insulating carbide includes at least one of boron carbide, silicon carbide and zirconium carbide.

In any embodiment of the present application, the silicate includes at least one of mica powder, fluorophlogopite powder, talc powder, hydrotalcite, hydrotalcite-like, mullite, and montmorillonite.

Optionally, the silicate includes at least one of mica powder, fluorophlogopite powder, talc powder, hydrotalcite, and hydrotalcite-like. These materials have a two-dimensional (or nearly two-dimensional) structure, so that when they are used as inorganic fillers, the diffusion path of the liquid solution (i.e., the resin solution) to the coating area of the positive electrode slurry becomes longer with larger diffusion resistance, the migration speed of the fluorine-free insulating slurry to the coating area of the positive electrode slurry becomes slower, so that the blurring width of the fusion zone is capable of being further reduced, or even no fusion zone is formed.

In any embodiment of the present application, the aluminosilicate includes at least one of mullite and orthoclase.

In any embodiment of the present application, the carbonates include at least one of calcium carbonate, magnesium carbonate, calcite, magnesite, dolomite, siderite, rhodochrosite, smithsonite, cerussite, strontianite, and witherite.

In any embodiment of the present application, the molecular sieve includes at least one of X-type, Y-type, MFI-type, MOR-type, MWW-type, SAPO-type, FER-type, and PLS-n-type molecular sieves.

Optionally, the molecular sieve includes at least one of MWW-type, SAPO-type, FER-type, and PLS-n-type molecular sieves. These materials have a two-dimensional (or nearly two-dimensional) structure, so that when they are used as inorganic fillers, the diffusion path of the liquid solution (i.e., the resin solution) to the coating area of the positive electrode slurry becomes longer with larger diffusion resistance, the migration speed of the fluorine-free insulating slurry to the coating area of the positive electrode slurry becomes slower, so that the blurring width of the fusion zone is capable of being further reduced, or even no fusion zone is formed.

In any embodiment of the present application, the volume average particle size Dv50 of the inorganic filler is 0.5 µm to 10 µm. Optionally, the volume average particle diameter Dv50 of the inorganic filler is 0.5 µm to 5 µm.

In any embodiment of the present application, the organic solvent includes at least one of N-methylpyrrolidone, triethyl phosphate, N,N-dimethylformamide, N,N-dimethylacetamide, dimethylsulfoxide, and diethylene glycol.

A second aspect of the present application provides a positive electrode sheet, comprising a positive electrode current collector, a positive electrode active material layer, and a fluorine-free insulating coating, wherein the positive electrode active material layer is located on at least part of the surface of the positive electrode current collector, and the fluorine-free insulating coating is located on the surface of the positive electrode current collector and adjoins the edge of the positive electrode active material layer, and the fluorine-free insulating coating is a layer formed by drying the fluorine-free insulating slurry of the first aspect of the present application.

In any embodiment of the present application, the fluorine-free insulating coating is located on both sides of the positive electrode active material layer along its length direction.

In any embodiment of the present application, the thickness of the fluorine-free insulating coating is 5 µm to 100 µm.

In any embodiment of the present application, the width of the fluorine-free insulating coating is 0.1 mm to 15 mm.

A third aspect of the present application provides a secondary battery comprising the positive electrode sheet of the second aspect of the present application.

A fourth aspect of the present application provides a battery module comprising the secondary battery of the third aspect of the present application.

A fifth aspect of the present application provides a battery pack comprising one of the secondary batteries of the third aspect of the present application and the battery module of the fourth aspect of the present application.

A sixth aspect of the present application provides an electrical apparatus comprising at least one of the secondary batteries of the third aspect of the present application, the battery module of the fourth aspect of the present application, and the battery pack of the fifth aspect of the present application.

### [Beneficial effects]

The fluorine-free insulating slurry of the present application can effectively suppress or even eliminate the formation of a fusion zone of the positive electrode sheet, thereby fundamentally solving the problem of restricted increase in coating speed; and the fluorine-free insulating slurry of the present application can also ensure the high energy density of the secondary battery. The insulating coating prepared from the fluorine-free insulating slurry of the present application is capable of having high mechanical strength, high heat resistance, high insulativity, high adhesion, high toughness and excellent electrolyte solution resistance at the same time, and even when the negative electrode active material layer pierces the separator and contacts the positive electrode sheet due to foreign matter, burrs, etc., the insulating coating can prevent the direct contact between the negative electrode active material layer and the positive electrode current collector, thereby ensuring the high safety performance of the secondary battery. In addition, the fluorine-free insulating slurry of the present application is capable of ensuring that the positive electrode sheet prepared therefrom has a good processability, a low breakage rate, and a high quality product rate.

The battery module, battery pack, and electrical apparatus of the present application comprise the secondary battery provided by the present application, and thus have at least the same advantages as those of the secondary battery.

### Description of Drawings

In order to more clearly illustrate the technical solutions in embodiments of the present application, the accompanying drawings to be used in the embodiments of the present application will be briefly introduced below. Apparently, the drawings described below are merely some embodiments of the present application. For those of ordinary skills in the art, other drawings may also be obtained based on these drawings without making creative work.
Fig. 1 is a schematic diagram of an embodiment of a positive electrode sheet according to the present application.
Fig. 2 is a schematic diagram of an embodiment of a secondary battery according to the present application.
Fig. 3 is an exploded view of an embodiment of the secondary battery in Fig. 2.
Fig. 4 is a schematic diagram of an embodiment of a battery module according to the present application.
Fig. 5 is a schematic diagram of an embodiment of a battery pack according to the present application.
Fig. 6 is an exploded view of an embodiment of the battery pack as shown in Fig. 5.
Fig. 7 is a schematic diagram of an embodiment of an electrical apparatus comprising a secondary battery according to the present application as a power source.
Fig. 8 shows the comparison of the results of the fluorine-free insulating slurries prepared in Embodiment 1 and Comparative Embodiment 1 under high-speed coating.

In the accompanying drawings, the accompanying drawings are not necessarily drawn to actual scale.

### Detailed Description

Hereinafter, the embodiments of the fluorine-free insulating slurry, positive electrode sheet, secondary battery, battery module, battery pack and electrical apparatus of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4, and 5 are listed, the following ranges are all contemplated: 1 to 3, 1 to 4, 1 to 5, 2 to 3, 2 to 4 and 2 to 5. In the present application, unless stated otherwise, the numerical range "a-b" represents an abbreviated representation of any combination of real numbers between a to b, wherein both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specifically stated, all steps in the present application may be performed sequentially or randomly, and are preferably performed sequentially. For example, the method includes steps (a) and (b), indicating that the method may include steps (a) and (b) performed sequentially, or may include steps (b) and (a) performed sequentially. For example, reference to the method may further include step (c), indicating that step (c) may be added to the method in any order, e.g., the method may include steps (a), (b), and (c), or may include steps (a), (c), and (b), or may include steps (c), (a), and (b).

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

Unless otherwise specified, in the present application, the term "acrylate" refers to a monomer, which refers to the generic term of acrylic acid and its derivatives, and esters of its homologues, which can self-polymerize or copolymerize with other monomers.

Unless otherwise specified, in the present application, the term "acrylic resin" refers to the generic term of a series of polymers prepared from self-polymerization of acrylic acid and its derivatives, and ester monomers of its homologues, or from co-polymerization of them as the main monomer with other monomers. Acrylic resins with different properties can be obtained according to different formulations and production processes. In the present application, the acrylic resin that can be used as the first resin needs to at least have a glass transition temperature of above 80°C and a liquid absorbency in a standard electrolyte solution of below 15%, and the acrylic resin that can be used as the second resin needs to at least have a glass transition temperature of below - 5°C.

Unless otherwise specified, in the present application, the term "copolymer" refers to any one of random copolymers, alternating copolymers, block copolymers, and graft copolymers.

Secondary batteries, also known as rechargeable batteries or storage batteries, refer to batteries that, after being discharged, can activate active materials by charging for continuous use. Generally, the secondary battery includes an electrode assembly and an electrolyte. The electrode assembly comprises a positive electrode sheet, a negative electrode sheet, and a separator. The positive electrode sheet includes a positive electrode current collector and a positive electrode material layer arranged on the surface of the positive electrode current collector, and the positive electrode material layer comprises a positive electrode active material. The negative electrode sheet includes a negative electrode current collector and a negative electrode active material layer arranged on the surface of the negative electrode current collector, and the negative electrode active material layer comprises a negative electrode active material. During the charging and discharging process of the battery, active ions are intercalated and deintercalated back and forth between the positive electrode sheet and the negative electrode sheet. The separator is provided between the positive electrode sheet and the negative electrode sheet, and mainly functions to prevent a short circuit between the positive electrode and the negative electrode while allowing active ions to pass through. The electrolyte plays the role of conducting active ions between the positive electrode sheet and the negative electrode sheet.

Safety issues are an important factor restricting the application and promotion of secondary batteries. Among them, the internal short circuit is the main reason that affects the safety of secondary batteries and even causes failure of secondary batteries. There are four main types of short circuits in secondary batteries: (1) short circuit between negative electrode current collector and positive electrode current collector; (2) short circuit between negative electrode active material layer and positive electrode active material layer; (3) short circuit between negative electrode active material layer and positive electrode current collector; and (4) short circuit between positive electrode active material layer and negative electrode current collector. Most studies believe that the short circuit between the negative electrode active material layer and the positive electrode current collector is the most dangerous, mainly because the negative electrode active material layer is a good conductor of electrons, so the impedance of the short circuit point is small, the voltage will drop sharply after the short circuit, and the temperature at the short circuit point can rise sharply, which can eventually cause a fire or even an explosion.

In order to improve the safety performance of the secondary battery, a commonly adopted strategy is to insulate the region of the surface of the positive electrode current collector immediately adjacent to the positive electrode active material layer, such as by applying an insulating coating. Existing insulating slurries are divided into two categories: oil-based insulating slurries and water-based insulating slurries. Since oil-based solvents, such as N-methylpyrrolidone (NMP), are widely used in current positive electrode slurries, there is a compatibility problem between oil-based positive electrode slurries and water-based insulating slurries (e.g., traditional alumina insulating slurries). During coating, when the oil-based positive electrode slurry meets the water-based insulating slurry, the N-methylpyrrolidone in the oil-based positive electrode slurry will be quickly captured by the water in the water-based insulating slurry, so that powders such as binders and positive electrode active materials that are originally dissolved or dispersed in the N-methyl pyrrolidone will rapidly agglomerate, resulting in rapid bulging of the fusion zone between the oil-based positive slurry and the water-based insulating slurry and embrittlement of the positive electrode sheet, even breakage of the positive electrode sheet when wound up, leading to disruption of the coating process. Therefore, the widely used insulating slurries are mainly oil-based insulating slurries.

During research, the inventors noticed that during the oven-drying process of the positive electrode sheet, the existing oil-based insulating slurry would migrate to the coating area of the positive electrode slurry, so that after oven-drying, a fusion zone (commonly known as faulty edge, that is, migration width of insulating coating to positive electrode active material layer) would form at the boundary between the positive electrode active material layer and the insulating coating. The blurring width of the fusion zone is actually the distance of the insulating slurry migrating to the coating area of the positive electrode slurry or the width of the area of the positive electrode active material layer covered by the insulating coating. The appearance of the fusion zone will lead to difficult positioning of the CCD (Charge Coupled Device) visual inspection equipment during the laser die-cutting process, inaccurate die-cutting size of the positive electrode sheet, and even endanger the Overhang of the secondary battery, thus bringing serious potential safety hazards to the secondary battery. In addition, the fusion zone is actually the area where the components of the insulating coating and the components of the positive electrode active material layer are fused with each other, or the area where the positive electrode active material layer is covered by the insulating coating, so the ion conductivity performance of the fusion zone is usually poor, blocking/obstructing the deinterclation and interclation of some active ions. Therefore, the appearance of the fusion zone also reduces the energy density of the secondary battery, and the wider the fusion zone, the more obvious the decrease in the energy density of the secondary battery.

The inventors have unexpectedly discovered through extensive research that the main reason why the existing oil-based insulating slurries are easy to migrate to the coating area of the positive electrode slurry is that fluoropolymers are widely used in the existing oil-based insulating slurries. Fluorine has the largest electronegativity, strong electron-withdrawing property, and high C-F bond energy, so the surface activity of the fluoropolymer is high, its surface tension is low, and the surface tension of the insulating slurry is also low, obviously less than the surface tension of the positive electrode slurry. Therefore, in the oven-drying process of the positive electrode sheet, the existing oil-based insulating slurry is easy to migrate to the coating area of the positive electrode slurry, and after oven-drying is completed, a wide fusion zone is formed between the positive electrode active material layer and the insulating coating. In addition, the faster the coating speed, the wider the fusion zone, and even in high-speed coating, for example, when the coating speed is > 30 m/min, the blurring width of the fusion zone may exceed 3 mm. The main reason is that the faster the coating speed, the higher the corresponding oven-drying temperature, the better the fluidity of the insulating slurry at high temperatures, the lower its surface tension, and the easier it is to migrate to the coating area of the positive electrode slurry.

Based on this, the inventor proposes a technical solution of a fluorine-free insulating slurry after in-depth research.

### Fluorine-free insulating slurry

A first aspect of the embodiment of the present application provides a fluorine-free insulating slurry, comprising a first resin, a second resin, an inorganic filler and an organic solvent, wherein the first resin is selected from resins with a glass transition temperature (Tg) of above 80°C and a liquid absorbency in a standard electrolyte solution of below 15%, and the second resin is selected from resins with a glass transition temperature of below -5°C.

In the present application, the term "standard electrolyte solution" refers to an electrolyte solution with 1 mol/L lithium hexafluorophosphate (LiPF₆) formed from LiPF₆ and a mixed solvent comprising ethylene carbonate (EC), ethyl methyl carbonate (EMC), and dimethyl carbonate (DMC) in a volume ratio of 1:1:1.

In the present application, the term "liquid absorbency in a standard electrolyte solution" refers to the result calculated according to the formula of liquid absorbency = (m₂-m₁)/ m₁×100%, after soaking a resin sample of a certain mass in a standard electrolyte solution for 168 h, where m₁ represents the mass of the resin sample before soaking, and m₂ represents the mass of the resin sample after soaking. For the test of liquid absorbency, please refer to QB/T 2303.11-2008 "Coated Paper for Batteries - Part 11 - Determination of Liquid Absorbency". An exemplary test method includes steps of: taking a resin sample with a length x width x thickness of 20 mm x 10 mm x 1 mm at 25°C and standard atmospheric pressure; soaking it in the above standard electrolyte solution for 168 h; taking the sample out and cleaning its surface with a dust-free paper; then weighing the sample quickly; and calculating the liquid absorbency of the resin sample in the standard electrolyte solution according to the formula of liquid absorbency =(m₂-m₁)/m₁×100%.

The inventors have unexpectedly discovered that the main reason why the existing oil-based insulating slurries are easy to migrate to the coating area of the positive electrode slurry is that fluoropolymers are widely used in the existing oil-based insulating slurries, resulting in the formation of a wide fusion zone. The fluorine-free insulating slurry of the present application shows high surface tension because it does not use fluoropolymers, so that the problem that a wide fusion zone easily occurs when the insulating slurry is coated can be fundamentally solved, avoiding the safety hazards of the secondary battery. In addition, even when the fluorine-free insulating slurry of the present application is applied at high speed, for example, when the coating speed is above 30 m/min, even above 60 m/min, or above 70 m/min, the resulting fusion zone is not wide, even no fusion zone is formed. Therefore, the technical solution of the present application can fundamentally solve the problem of restricted increase of coating speed, thus avoiding the safety hazards of the secondary battery and also significantly improving the efficiency of secondary battery production.

The fluorine-free insulating slurry comprising a first resin with a glass transition temperature of above 80°C and a liquid absorbency in a standard electrolyte solution of below 15% and a second resin with a glass transition temperature of below -5°C provided by the present application has the following specific beneficial effects:

First, the positive electrode insulating slurry of the present application is capable of significantly reducing the blurring width of the fusion zone of the positive electrode sheet. Since there is no fluorine in the entire positive electrode insulating slurry system, it is capable of significantly reducing the surface tension of the positive electrode insulating slurry and narrowing the gap in surface tension between the positive electrode insulating slurry and the positive electrode slurry, thereby greatly improving the coating speed and effectively suppressing the formation of a wide fusion zone, thus significantly improving the safety performance of the secondary battery and increasing the energy density of the secondary battery. For the technical solution of the present application, when the coating speed is above 70 m/min, the blurring width of the fusion zone is capable of being < 1 mm, ≤ 0.5 mm, or even ≤ 0.2 mm, which is significantly better than the industry average (when the coating speed is 30 m/min to 45 m/min, the blurring width of the fusion zone is > 1 mm, or even greater than 2 mm).

Second, the insulating coating formed by the positive electrode insulating slurry of the present application has good electrolyte solution resistance, and thus has good adhesion performance. The liquid absorbency in a standard electrolyte solution of the first resin is below 15%, and it has excellent electrolyte solution resistance, so that the insulating coating has good electrolyte solution resistance, thereby effectively preventing the insulating coating from falling off the positive electrode current collector for being soaked in the electrolyte solution, and ensuring that the secondary battery has high safety performance.

Third, the insulating coating formed by the positive electrode insulating slurry of the present application has good flexibility. Because the first resin has excellent electrolyte solution resistance, the glass transition temperature of the first resin is usually high (the first resin tends to be in a glassy state at ambient temperature), so the flexibility of its molecular chain is poor. As a result, the insulating coating prepared using the first resin alone has high brittleness, and the positive electrode sheet is easily broken when wound up. The glass transition temperature of the second resin in the positive electrode insulating slurry of the present application is below -5°C (the second resin tends to be in a high elastic state at ambient temperature), so the flexibility of the molecular chain of the second resin is good. Therefore, the second resin is capable of avoiding the problem that the positive electrode sheet is easily broken when wound up due to the high glass transition temperature of the first resin, ensuring that the positive electrode sheet has good processability.

Fourth, the positive electrode insulating slurry of the present application also comprises an inorganic filler, which is capable of increasing the mechanical strength and heat resistance of the insulating coating, and effectively preventing the direct contact between the negative electrode active material layer and the positive electrode current collector, even when the negative electrode active material layer pierces the separator and comes into contact with the positive electrode sheet due to foreign matter, burrs, etc., thereby ensuring the high safety performance of the secondary battery.

Therefore, the technical solution of the fluorine-free insulating slurry of the present application is capable of effectively suppressing or even eliminating the formation of a fusion zone, thereby fundamentally solving the problem of restricted increase in coating speed; and the technical solution of the fluorine-free insulating slurry of the present application can also ensure the high energy density of the secondary battery. The insulating coating prepared from the fluorine-free insulating slurry of the present application is capable of having high mechanical strength, high heat resistance, high insulativity, high adhesion, high toughness and excellent electrolyte solution resistance at the same time, and even when the negative electrode active material layer pierces the separator and contacts the positive electrode sheet due to foreign matter, burrs, etc., the insulating coating can prevent the direct contact between the negative electrode active material layer and the positive electrode current collector, thereby ensuring the high safety performance of the secondary battery. In addition, the fluorine-free insulating slurry of the present application is capable of ensuring that the positive electrode sheet prepared therefrom has a good processability, a low breakage rate, and a high quality product rate.

In some embodiments, based on the total mass of the fluorine-free insulating slurry, the percentage mass content w1 of the first resin may be 1%, 1.5%, 2%, 2.5%, 3%, 3.5%, 4%, 4.5%, 5% or within a range defined by any of the above values. Optionally, the percentage mass content w1 of the first resin is 1% to 5%, 1.5% to 5%, 2% to 5%, 2.5% to 5%, 3% to 5%, 3.5% to 5% %, 4% to 5%, 1% to 4%, 1.5% to 4%, 2% to 4%, 2.5% to 4%, 3% to 4%, 3.5% to 4%, 1% to 3%, 1.5% to 3%, 2% to 3%, 2.5% to 3%, 1% to 2%, or 1.5% to 2%.

When the percentage mass content of the first resin is high, the insulating coating has high brittleness and poor toughness, and the breakage rate of the positive electrode sheet increases when wound up. When the percentage mass content of the first resin is low, the electrolyte solution resistance of the insulating coating is poor, and the insulating coating easily falls off the positive electrode current collector during the long-term storage and use of the secondary battery, so that the safety performance of the secondary battery deteriorates in long-term storage and use. Therefore, when the percentage mass content of the first resin is within an appropriate range, the insulating coating has high adhesion, high toughness and excellent electrolyte solution resistance at the same time, thereby ensuring that the secondary battery has high safety performance during long-term storage and use, while the positive electrode sheet has a lower breakage rate and a higher quality product rate.

In some embodiments, based on the total mass of the fluorine-free insulating slurry, the percentage mass content w2 of the second resin may be 2%, 3%, 4%, 5%, 6%, 7%, 8%, 9%, 10% or within a range defined by any of the above values. Optionally, the percentage mass content w2 of the second resin is 2% to 10%, 3% to 10%, 4% to 10%, 5% to 10%, 6% to 10%, 7% to 10% %, 8% to 10%, 9% to 10%, 2% to 9%, 3% to 9%, 4% to 9%, 5% to 9%, 6% to 9%, 7% to 9%, 8% to 9%, 2% to 8%, 3% to 8%, 4% to 8%, 5% to 8%, 6% to 8%, 7% to 8%, 2% to 7%, 3% to 7%, 4% to 7%, 5% to 7%, 6% to 7%, 2% to 6%, 3% to 6%, 4% to 6%, 5% to 6%, 2% to 5 %, 3% to 5%, or 4% to 5%.

When the percentage mass content of the second resin is high, the liquid absorbency of the insulating coating is high, and the electrolyte solution wettability of the positive electrode sheet and the negative electrode sheet is deteriorated, so that the electrochemical performance of the secondary battery is deteriorated; also, the electrolyte solution resistance of the insulating coating is poor, and the insulating coating easily falls off the positive electrode current collector during long-term storage and use of the secondary battery, so that the safety performance of the secondary battery during long-term storage and use is deteriorated. When the percentage mass content of the second resin is low, the brittleness of the insulating coating is high, and the breakage rate of the positive electrode sheet increases when wound up. Therefore, when the percentage mass content of the second resin is within an appropriate range, the insulating coating has high adhesion, high toughness and excellent electrolyte solution resistance at the same time, thereby ensuring that the secondary battery has high safety performance during long-term storage and use, while the positive electrode sheet has a lower breakage rate and a higher quality product rate.

In some embodiments, based on the total mass of the fluorine-free insulating slurry, the percentage mass content w3 of the inorganic filler may be 15%, 17.5%, 20%, 22.5%, 25%, 27.5%, 30% or within a range defined by any of the above values. Optionally, the percentage mass content w3 of the inorganic filler is 15% to 30%, 17.5% to 30%, 20% to 30%, 22.5% to 30%, 25% to 30%, 27.5% to 30%, 15% to 25%, 17.5% to 25%, 20% to 25%, 22.5% to 25%, 15% to 20%, or 17.5% to 20%.

When the percentage mass content of the inorganic filler is high, the adhesion of the insulating coating is deteriorated, and the insulating coating easily falls off the positive electrode current collector during the long-term storage and use of the secondary battery, so that the safety performance of the secondary battery deteriorates in long-term storage and use. When the percentage mass content of the inorganic filler is low, the mechanical strength, heat resistance and insulativity of the insulating coating are poor, so that the direct contact between the negative electrode active material layer and the positive electrode current collector cannot be effectively prevented, and the risk of short circuit in the secondary battery increases. Therefore, when the percentage mass content of the inorganic filler is within an appropriate range, the insulating coating has high mechanical strength, high heat resistance, high insulativity, high adhesion, high toughness and excellent electrolyte solution resistance at the same time, and even when the negative electrode active material layer pierces the separator and contacts the positive electrode sheet due to foreign matter, burrs, etc., the insulating coating can prevent the direct contact between the negative electrode active material layer and the positive electrode current collector, thereby ensuring the higher safety performance of the secondary battery.

In some embodiments, based on the total mass of the fluorine-free insulating slurry, the percentage mass content w4 of the organic solvent may be 55%, 60%, 65%, 70%, 75%, 80%, 82% or within a range defined by any of the above values. Optionally, the percentage mass content w4 of the organic solvent is 55% to 82%, 60% to 82%, 65% to 82%, 70% to 82%, 75% to 82%, 55% to 80%, 60% to 80%, 65% to 80%, 70% to 80%, 75% to 80%, 55% to 75%, 60% to 75%, 65% to 75%, 70% to 75%, 55 % to 70%, 60% to 70%, 65% to 70%, 55% to 65%, 60% to 65%, or 55% to 60%.

In some embodiments, based on the total mass of the fluorine-free insulating slurry, the percentage mass content w1 of the first resin is 1% to 5%, the percentage mass content w2 of the second resin is 2% to 10%, the percentage mass content w3 of the inorganic filler is 15% to 30%, and the percentage mass content w4 of the organic solvent is 55% to 82%. By reasonably adjusting the percentage mass contents of the first resin, the second resin, the inorganic filler and the organic solvent, the formation of the fusion zone is capable of being effectively suppressed while the coating speed is remarkably improved, and also it can ensure that the positive electrode sheet thus prepared has an excellent processability, a lower breakage rate and a higher quality product rate. In addition, the insulating coating thus obtained has high mechanical strength, high heat resistance, high insulativity, high adhesion, high toughness and excellent electrolyte solution resistance at the same time, and the secondary battery using the insulating coating can have good electrochemical performance as well as higher safety performance.

In some embodiments, the mass ratio of the first resin to the second resin is 0.1 to 1.5, that is, w1/w2 is 0.1 to 1.5. Optionally, w1/w2 is 0.2 to 1.0. By adjusting the mass ratio of the first resin to the second resin to be in an appropriate range, the toughening effect of the second resin on the first resin and the reinforcing effect of the first resin on the second resin are capable of being fully exerted, so that the insulating coating has high adhesion, high toughness and excellent electrolyte solution resistance at the same time, the positive electrode sheet has a lower breakage rate and a higher quality product rate, and the secondary battery has higher safety performance.

In some embodiments, the ratio of the total mass of the first resin and the second resin to the mass of the inorganic filler is 0.1 to 0.9, that is, (w1+w2)/w3 is 0.1 to 0.9. Optionally, (w1+w2)/w3 is 0.2 to 0.7. By adjusting the ratio of the total mass of the first resin and the second resin to the mass of the inorganic filler to be in a suitable range, the insulating coating has high mechanical strength, high heat resistance, high insulativity and high adhesion at the same time, and even when the negative electrode active material layer pierces the separator and contacts the positive electrode sheet due to foreign matter, burrs, etc., the direct contact between the negative electrode active material layer and the positive electrode current collector can be prevented, thereby ensuring the higher safety performance of the secondary battery.

In some embodiments, w1/w2 is 0.1 to 1.5, and (w1+w2)/w3 is 0.1 to 0.9. In this case, the insulating coating has high mechanical strength, high heat resistance, high insulativity, high adhesion, high toughness and excellent electrolyte solution resistance at the same time, and even when the negative electrode active material layer pierces the separator and contacts the positive electrode sheet due to foreign matter, burrs, etc., the insulating coating can prevent the direct contact between the negative electrode active material layer and the positive electrode current collector, thereby ensuring the higher safety performance of the secondary battery. Also, the positive electrode sheet can have a lower breakage rate and a higher quality product rate. Further, w1/w2 is 0.2 to 1.0, and (w1+w2)/w3 is 0.2 to 0.7.

The viscosity of the fluorine-free insulating slurry mainly affects the coating performance of the fluorine-free insulating slurry. If the viscosity is too large, the fluorine-free insulating slurry cannot be coated on the surface of the positive electrode current collector; meanwhile, the viscosity of the fluorine-free insulating slurry should not be too small, otherwise the fluidity of the fluorine-free insulating slurry will be high, and the fusion zone will be easy to widen. In some embodiments, the viscosity of the fluorine-free insulating slurry at 25°C is 1000 cps to 20000 cps. For example, the viscosity of the fluorine-free insulating slurry at 25°C is 1000 cps, 2000 cps, 3000 cps, 4000 cps, 5000 cps, 6000 cps, 7000 cps, 8000 cps, 9000 cps, 10000 cps, 11000 cps, 12000 cps, 13000 cps, 14000 cps, 15000 cps, 16000 cps, 17000 cps, 18000 cps, 19000 cps, 20000 cps or within a range defined by any of the above values. Optionally, the viscosity of the fluorine-free insulating slurry at 25°C is 2000 cps to 20000 cps, 4000 cps to 20000 cps, 6000 cps to 20000 cps, 8000 cps to 20000 cps, 10000 cps to 20000 cps, 12000 cps to 20000 cps, 14000 cps to 20000 cps, 16000 cps to 20000 cps, 18000 cps to 20000 cps, 1000 cps to 15000 cps, 2000 cps to 15000 cps, 4000 cps to 15000 cps, 6000 cps to 15000 cps, 8000 cps to 15000 cps, 10000 cps to 15000 cps, 12000 cps to 15000 cps, 1000 cps to 10000 cps, 2000 cps to 10000 cps, 4000 cps to 10000 cps, 6000 cps to 10000 cps, 8000 cps to 10000 cps, 1000 cps to 8000 cps, 2000 cps to 8000 cps, 3000 cps to 8000 cps, 4000 cps to 8000 cps, 5000 cps to 8000 cps, 6000 cps to 8000 cps, 1000 cps to 5000 cps, 2000 cps to 5000 cps, 3000 cps to 5000 cps, or 4000 cps to 5000 cps.

In some embodiments, the glass transition temperature of the first resin is above 80°C, for example, above 100°C, above 120°C, above 150°C, and above 180°C. The glass transition temperature of the first resin should not be too high. In some embodiments, the glass transition temperature of the first resin is further below 400°C, for example, below 350°C, below 300°C, below 250°C, below 200°C, and below 150°C. Optionally, the glass transition temperature of the first resin is 80°C to 350°C, 80°C to 300°C, 80°C to 250°C, 80°C to 200°C, 80°C to 150°C, 100°C to 350°C, 100°C to 300°C, 100°C to 250°C, 100°C to 200°C, 100°C to 150°C, 120°C to 350°C, 120°C to 300°C, 120°C to 250°C, 120°C to 200°C, 120 °C to 150°C, 150°C to 350°C, 150°C to 300°C, 150°C to 250°C, 150°C to 200°C, 180°C to 350°C, 180°C to 300°C, 180°C to 250°C, or 180°C to 200°C.

In some embodiments, the glass transition temperature of the second resin is below - 5°C, for example, below -10°C, below -15°C, below -20°C, below -25°C, below -30°C, and below -35°C. The glass transition temperature of the second resin should not be too low. In some embodiments, the glass transition temperature of the second resin is further above -80°C, for example, above -70°C, above -60°C, above -50°C, above -40°C, and above -30°C. Optionally, the glass transition temperature of the second resin is -60°C to -5°C, -55°C to -5°C, -50°C to -5°C, - 45°C to -5°C, -40°C to -5°C, -35°C to -5°C, -60°C to -10°C, -55°C to -10°C, -50°C to -10°C, - 45°C to -10°C, -40°C to - 10°C, -35°C to -10°C, -60°C to -15°C, -55°C to -15°C, -50°C to -15°C, -45°C to -15°C, -40°C to -15°C, or -35°C to -15°C.

In some embodiments, the liquid absorbency in a standard electrolyte solution of the first resin is below 15%, for example, below 14%, below 13%, below 12%, below 11%, below 10%, below 9%, below 8%, below 7%, below 6%, below 5%, below 4%, or even below 3%.

In the present application, the second resin is a resin whose glass transition temperature is below -5°C. At ambient temperature, the second resin tends to be in a highly elastic state, and its molecular chain has good flexibility. Therefore, its liquid absorbency in a standard electrolyte solution is usually high, for example, above 50%, above 60%, above 70%, above 80%, above 100%, and above 200%. The liquid absorbency in a standard electrolyte solution of the second resin should not be too high, usually below 1000%, further below 800%, below 600%, below 500%, below 400%, and below 300%. Optionally, the liquid absorbency in a standard electrolyte solution of the second resin is 50% to 1000%, 80% to 1000%, 100% to 1000%, 50% to 500%, 80% to 500%, 100% % to 500%, 50% to 400%, 80% to 400%, 100% to 400%, 50% to 300%, 80% to 300%, 100% to 300%, 50% to 200%, 80% to 200%, or 100% to 200%.

In some embodiments, the number average molecular weight of the first resin ranges from 10000 to 500000. Optionally, the number average molecular weight of the first resin is 20000 to 500000, 50000 to 500000, 100000 to 500000, 150000 to 500000, 200000 to 500000, 250000 to 500000, 300000 to 500000, 350000 to 500000, 400000 to 500000, 450000 to 500000, 10000 to 400000, 20000 to 400000, 50000 to 400000, 100000 to 400000, 150000 to 400000, 200000 to 400000, 250000 to 400000, 300000 to 400000, 350000 to 400000, 10000 to 300000, 20000 to 300000, 50000 to 300000, 100000 to 300000, 150000 to 300000, 200000 to 300000, or 250000 to 300000.

In some embodiments, the number average molecular weight of the second resin is 10000 to 1000000. Optionally, the number average molecular weight of the second resin is 10000 to 1000000, 20000 to 1000000, 50000 to 1000000, 100000 to 1000000, 200000 to 1000000, 300000 to 1000000, 400000 to 1000000, 500000 to 1000000, 600000 to 1000000, 700000 to 1000000, 800000 to 1000000, 10000 to 800000, 20000 to 800000, 50000 to 800000, 100000 to 800000, 200000 to 800000, 300000 to 800000, 400000 to 800000, 500000 to 800000, 600000 to 800000, 10000 to 500000, 20000 to 500000, 50000 to 500000, 100000 to 500000, 200000 to 500000, 300000 to 500000, 400000 to 500000, 10000 to 200000, 20000 to 200000, 50000 to 200000, or 100000 to 200000.

In some embodiments, the first resin is selected from at least one of polyimide resin, polyamideimide resin, polyamic acid resin, polyacrylamide resin, polyacrylonitrile resin, acrylate resin, acrylamide-acrylonitrile copolymer resin, and acrylamide-acrylonitrile-acrylate copolymer resin with a glass transition temperature of above 80°C and a liquid absorbency in a standard electrolyte solution of below 15%. In the acrylamide-acrylonitrile-acrylate copolymer resin, the type of the acrylate monomer is not particularly limited, as long as the glass transition temperature of the acrylamide-acrylonitrile-acrylate copolymer resin is guaranteed to be above 80°C, and its liquid absorbency in a standard electrolyte solution be below 15%.

In some embodiments, the first resin is selected from at least one of polyimide resin, polyamideimide resin, polyamic acid resin, polyacrylamide resin, polyacrylonitrile resin, acrylate resin, acrylamide-acrylonitrile copolymer resin, and acrylamide-acrylonitrile-acrylate copolymer resin with a glass transition temperature of above 80°C, a liquid absorbency in a standard electrolyte solution of below 15%, and a number average molecular weight of 10000 to 500000. In the acrylamide-acrylonitrile-acrylate copolymer resin, the type of the acrylate monomer is not particularly limited, as long as it is guaranteed that the acrylamide-acrylonitrile-acrylate copolymer resin has a glass transition temperature of above 80°C, a liquid absorbency in a standard electrolyte solution of below 15%, and a number average molecular weight of 10000 to 500000.

In some embodiments, the second resin is selected from at least one of hydrogenated nitrile-butadiene rubber, hydrogenated natural rubber, acrylate resin, hydrogenated styrene-butadiene-styrene copolymer resin, hydrogenated styrene-isoprene-styrene copolymer resin, hydrogenated styrene-ethylene-butylene-styrene copolymer resin, hydrogenated styrene-ethylene-propylene-styrene copolymer resin, hydrogenated styrene-ethylene-butadiene-styrene copolymer resin, vinyl acetate-ethylene copolymer resin, vinyl acetate-acrylate copolymer resin, acrylate-ethylene copolymer resin, and vinyl acetate-ethylene-acrylate copolymer resin with a glass transition temperature of below -5°C. Optionally, the acrylic resin is selected from at least one of poly-n-propyl acrylate resin, poly-isopropyl acrylate resin, poly-n-butyl acrylate resin, poly-isobutyl acrylate resin, poly-n-amyl acrylate resin, poly-n-hexyl acrylate resin, poly-2-ethylhexyl acrylate resin, polyl-auryl acrylate resin, poly-hydroxypropyl acrylate resin, poly-n-hexyl methacrylate, poly-n-octyl methacrylate, and poly-lauryl methacrylate resin. Among vinyl acetate-acrylate copolymer resins, acrylate-ethylene copolymer resins, and vinyl acetate-ethylene-acrylate copolymer resins, the types of the acrylate monomers are not particularly limited, as long as it can guarantee that the vinyl acetate-acrylate copolymer resin, the acrylate-ethylene copolymer resin, and the vinyl acetate-ethylene-acrylate copolymer resin have a glass transition temperature of below -5°C. Optionally, the acrylate monomer is selected from at least one of methyl acrylate, ethyl acrylate, n-propyl acrylate, isopropyl acrylate, n-butyl acrylate, isobutyl acrylate, n-pentyl acrylate, n-hexyl acrylate, 2-ethylhexyl acrylate, lauryl acrylate, hydroxypropyl acrylate, methyl methacrylate, ethyl methacrylate, n-hexyl methacrylate, n-octyl methacrylate, and lauryl methacrylate.

In some embodiments, the second resin is selected from at least one of hydrogenated nitrile-butadiene rubber, hydrogenated natural rubber, acrylate resin, hydrogenated styrene-butadiene-styrene copolymer resin, hydrogenated styrene-isoprene-styrene copolymer resin, hydrogenated styrene-ethylene-butylene-styrene copolymer resin, hydrogenated styrene-ethylene-propylene-styrene copolymer resin, hydrogenated styrene-ethylene-butadiene-styrene copolymer resin, vinyl acetate-ethylene copolymer resin, vinyl acetate-acrylate copolymer resin, acrylate-ethylene copolymer resin, and vinyl acetate-ethylene-acrylate copolymer resin with a glass transition temperature of -60°C to -5°C and a number average molecular weight of 10000 to 1000000. Optionally, the acrylic resin is selected from at least one of poly-n-propyl acrylate resin, poly-isopropyl acrylate resin, poly-n-butyl acrylate resin, poly-isobutyl acrylate resin, poly-n-amyl acrylate resin, poly-n-hexyl acrylate resin, poly-2-ethylhexyl acrylate resin, polyl-auryl acrylate resin, poly-hydroxypropyl acrylate resin, poly-n-hexyl methacrylate, poly-n-octyl methacrylate, and poly-lauryl methacrylate resin. Among vinyl acetate-acrylate copolymer resins, acrylate-ethylene copolymer resins, and vinyl acetate-ethylene-acrylate copolymer resins, the types of the acrylate monomers are not particularly limited, as long it can guarantee that the vinyl acetate-acrylate copolymer resin, the acrylate-ethylene copolymer resin, and the vinyl acetate-ethylene-acrylate copolymer resin have a glass transition temperature of -60°C to -5°C and a number average molecular weight of 10000 to 1000000. Optionally, the acrylate monomer is selected from at least one of methyl acrylate, ethyl acrylate, n-propyl acrylate, isopropyl acrylate, n-butyl acrylate, isobutyl acrylate, n-pentyl acrylate, n-hexyl acrylate, 2-ethylhexyl acrylate, lauryl acrylate, hydroxypropyl acrylate, methyl methacrylate, ethyl methacrylate, n-hexyl methacrylate, n-octyl methacrylate, and lauryl methacrylate.

Combining the above-mentioned first resin and second resin is capable of giving full play to the excellent electrolyte solution resistance of the first resin and the flexibility of the second resin, and giving full play to the toughening effect of the second resin on the first resin and the reinforcing effect of the first resin on the second resin. Under the synergistic effect of the two, the insulating coating has high insulativity, high adhesion and excellent electrolyte solution resistance at the same time, and the positive electrode sheet has a lower breakage rate and a higher quality product rate. In addition, selecting a suitable combination of the first resin and the second resin will not affect the electrolyte solution wettability of the positive electrode sheet and the negative electrode sheet, so that the secondary battery can have good electrochemical performance while having higher safety performance.

The type of the inorganic filler is not particularly limited in the present application, and any well-known material with insulativity, thermal stability, and electrochemical stability may be used. In some embodiments, the inorganic filler includes, but is not limited to, at least one of inorganic insulating oxides, inorganic insulating nitrides, inorganic insulating carbides, silicates, aluminosilicates, carbonates, and molecular sieves.

As an example, the inorganic insulating oxide includes, but is not limited to, at least one of alumina, boehumite, titanium dioxide, silicon dioxide, zirconium dioxide, magnesium oxide, calcium oxide, beryllium oxide, and spinel. As an example, the inorganic insulating nitride is selected from at least one of boron nitride, silicon nitride, aluminum nitride, and titanium nitride. As an example, the inorganic insulating carbide includes, but is not limited to, at least one of boron carbide, silicon carbide, and zirconium carbide. As an example, the silicate includes, but is not limited to, at least one of mica powder, fluorophlogopite powder, talc powder, hydrotalcite, hydrotalcite-like, mullite, and montmorillonite. As an example, the aluminosilicate includes, but is not limited to, at least one of mullite and orthoclase. As an example, the carbonate includes, but is not limited to, at least one of calcium carbonate, magnesium carbonate, calcite, magnesite, dolomite, siderite, rhodochrosite, smithsonite, cerussite, strontianite, and witherite. Optionally, the molecular sieve includes, but is not limited to, at least one of X-type, Y-type, MFI-type, MOR-type, MWW-type, SAPO-type, FER-type, and PLS-n-type molecular sieves.

In some embodiments, the morphology of the inorganic filler is a two-dimensional or nearly two-dimensional structure, such as layer, sheet, or thin plate. When the inorganic filler has a two-dimensional (or nearly two-dimensional) structure, the diffusion path of the liquid solution (i.e., the resin solution) to the coating area of the positive electrode slurry becomes longer with larger diffusion resistance, the migration speed of the fluorine-free insulating slurry to the coating area of the positive electrode slurry becomes slower, so that the blurring width of the fusion zone is capable of being further reduced, or even no fusion zone is formed.

Optionally, the two-dimensional (or nearly two-dimensional) structured inorganic filler includes, but is not limited to, at least one of two-dimensional inorganic layered silicates and two-dimensional inorganic molecular sieves. Among them, the crystal structure of inorganic layered silicate is formed from building block layers (or crystal layers) stacked in parallel with each other. The building block layer includes two parts: sheets and interlayer voids. The sheets are composed of silicon-oxygen tetrahedral sheets and metal cations (e.g., Mg²⁺, Fe²⁺, Al³⁺)-oxygen octohedral sheets in 1: 1 or 2:1. There are interlayer voids between the sheets, and the interlayer voids can be empty or filled with water molecules, cations, anions, and the like. Inorganic molecular sieve is a crystalline aluminosilicate whose spatial network structure is formed by silicon-oxygen tetrahedrons and aluminum-oxygen tetrahedrons arranged in a staggered manner. The two-dimensional inorganic layered silicate refers to an inorganic layered silicate with a two-dimensional or nearly two-dimensional structure, such as layer, sheet or thin plate, and the two-dimensional inorganic molecular sieve refers to an inorganic molecular sieve with a two-dimensional or nearly two-dimensional structure, such as layer, sheet or thin plate.

The two-dimensional inorganic layered silicate and the two-dimensional inorganic molecular sieve have strong adsorption capacity, and are capable of combining with the first resin and the second resin in the fluorine-free insulating slurry through van der Waals force, thereby further reducing the migration speed of the fluorine-free insulating slurry and the blurring width of the fusion zone.

The two-dimensional inorganic layered silicates and two-dimensional inorganic molecular sieves both have the advantages of good thermal stability and low cost, and also have a lamellar structure similar to graphite. As the van der Waals force of the interlayer structure is much smaller than the ionic force in the layer, interlayer slippage is capable of occuring when extruded. Therefore, the insulating coating using the above-mentioned inorganic filler has more excellent heat resistance and insulating properties, so that the safety performance of the secondary battery can be further improved. In addition, the two-dimensional inorganic layered silicate and the two-dimensional inorganic molecular sieve also have good toughness, so that the positive electrode sheet prepared therefrom has good processability.

When the inorganic filler has a two-dimensional (or nearly two-dimensional) structure, the inorganic filler has a layered, sheet-like or thin-plate-like morphology, and generally has a high diameter-thickness ratio. When the diameter-thickness ratio of the inorganic filler is small, its effect of reducing the migration speed of the fluorine-free insulating slurry is weak, so that the blurring width of the fusion zone is slightly increased. In some embodiments, the diameter-thickness ratio of the inorganic filler can be ≥30:1, ≥40:1, ≥50:1, ≥60:1, ≥70:1, ≥80:1, ≥90:1, ≥100:1, ≥110:1, ≥120:1, ≥130:1, ≥140:1, and ≥150:1. The larger the diameter-thickness ratio of the inorganic filler, the more obvious the effect of reducing the migration speed of the fluorine-free insulating slurry, but the manufacturing cost of the inorganic filler increases. In some embodiments, optionally, when the inorganic filler has a two-dimensional (or nearly two-dimensional) structure, the diameter-thickness ratio of the inorganic filler is 50:1 to 150:1, 50:1 to 140:1, 50:1 to 130:1, 50:1 to 120:1, 50:1 to 110:1, 50:1 to 100:1, 50:1 to 90:1, or 50:1 to 80:1.

As an example, the two-dimensional inorganic layered silicate includes, but is not limited to, at least one of mica powder, fluorophlogopite powder, talc powder, hydrotalcite, and hydrotalcite-like. As an example, the two-dimensional inorganic molecular sieve includes, but is not limited to, at least one of MWW-type, SAPO-type, FER-type, and PLS-n-type molecular sieves. Further, the two-dimensional inorganic molecular sieve includes at least one of MCM-22, MCM-49, MCM-56, SAPO-34, SAPO-18, and Al-PLS-3.

In some embodiments, when the fluorine-free insulating slurry includes at least one of mica powder and talc powder, some transition metal impurities in mica powder and talc powder can be removed by pickling and water washing in advance. These transition metal impurities may hinder the electrochemical performance of the secondary battery, for example, increase the selfdischarge of the secondary battery. The number of times of pickling and water washing is not particularly limited in the present application, and can be selected according to actual needs. An aqueous solution of a weak acid, such as an aqueous solution of boric acid, is preferably used during pickling. Of course, a dilute solution of a strong acid, such as an aqueous solution of nitric acid, sulfuric acid or hydrochloric acid with a mass fraction of about 1% can also be selected.

In some embodiments, the volume average particle size Dv50 of the inorganic filler is 0.5 µm to 10 µm. For example, the volume-average particle size Dv50 of the inorganic filler is 0.5 µm, 1 µm, 2 µm, 3 µm, 4 µm, 5 µm, 6 µm, 7 µm, 8 µm, 9 µm, 10 µm or within a range defined by any of the above values. Optionally, the volume average particle size of the inorganic filler is 0.5 µm to 9 µm, 0.5 µm to 8 µm, 0.5 µm to 7 µm, 0.5 µm to 6 µm, 0.5 µm to 5 µm, 0.5 µm to 4 µm, 0.5 µm to 3 µm, 1 µm to 10 µm, 1 µm to 9 µm, 1 µm to 8 µm, 1 µm to 7 µm, 1 µm to 6 µm, 1 µm to 5 µm, 1 µm to 4 µm, or 1 µm to 3 µm.

The type of the organic solvent is not particularly limited in the present application, and compounds known in the art that is capable of dissolving the first resin and the second resin can be used. In some embodiments, the organic solvent includes, but is not limited to, at least one of N-methylpyrrolidone (NMP), triethyl phosphate, N,N-dimethylformamide, N,N-dimethylacetamide, dimethylsulfoxide, and diethylene glycol.

In some embodiments, the fluorine-free insulating slurry includes a first resin, a second resin, an inorganic filler and an organic solvent; based on the total mass of the fluorine-free insulating slurry, the percentage mass content of the first resin w1 is 1% to 5%, the percentage mass content w2 of the second resin is 2% to 10%, the percentage mass content w3 of the inorganic filler is 15% to 30%, and the percentage mass content w4 of the organic solvent is 55% to 82%; the first resin is selected from at least one of polyimide resin, polyamide-imide resin, polyamic acid resin, polyacrylamide resin, polyacrylonitrile resin, acrylate resin, acrylamide-acrylonitrile copolymer resin, and acrylamide-acrylonitrile-acrylate copolymer resin with a glass transition temperature of above 80°C and a liquid absorbency in a standard electrolyte solution of below 15%; the second resin is selected from at least one of hydrogenated nitrile-butadiene rubber, hydrogenated natural rubber, acrylate resin, hydrogenated styrene-butadiene-styrene copolymer resin, hydrogenated styrene-isoprene-styrene copolymer resin, hydrogenated styrene-ethylene-butylene-styrene copolymer resin, hydrogenated styrene-ethylene-propylene-styrene copolymer resin, hydrogenated styrene-ethylene-butadiene-benzene copolymer resin, vinyl acetate-ethylene copolymer resin, vinyl acetate-acrylate copolymer resin, acrylate-ethylene copolymer resin, and vinyl acetate-ethylene-acrylate copolymer resin with a glass transition temperature of below -5°C; the inorganic filler includes at least one of inorganic insulating oxides, inorganic insulating nitrides, inorganic insulating carbides, silicates, aluminosilicates, carbonates, and molecular sieves, and optionally, the inorganic filler includes at least one of two-dimensional inorganic layered silicates and two-dimensional inorganic molecular sieves.

In some embodiments, the fluorine-free insulating slurry includes a first resin, a second resin, an inorganic filler and an organic solvent; based on the total mass of the fluorine-free insulating slurry, the percentage mass content of the first resin w1 is 1% to 5%, the percentage mass content w2 of the second resin is 2% to 10%, the percentage mass content w3 of the inorganic filler is 15% to 30%, and the percentage mass content w4 of the organic solvent is 55% to 82%; w1/w2 is 0.1 to 1.5, optionally 0.2 to 1.0; (w1+w2) /w3 is 0.1 to 0.9, optionally 0.2 to 0.7; the first resin is selected from at least one of polyimide resin, polyamide-imide resin, polyamic acid resin, polyacrylamide resin, polyacrylonitrile resin, acrylate resin, acrylamide-acrylonitrile copolymer resin, and acrylamide-acrylonitrile-acrylate copolymer resin with a glass transition temperature of above 80°C, a liquid absorbency in a standard electrolyte solution of below 15%, and a number average molecular weight of 10000 to 500000; the second resin is selected from at least one of hydrogenated nitrile-butadiene rubber, hydrogenated natural rubber, acrylate resin, hydrogenated styrene-butadiene-styrene copolymer resin, hydrogenated styrene-isoprene-styrene copolymer resin, hydrogenated styrene-ethylene-butylene-styrene copolymer resin, hydrogenated styrene-ethylene-propylene-styrene copolymer resin, hydrogenated styrene-ethylene-butadiene-benzene copolymer resin, vinyl acetate-ethylene copolymer resin, vinyl acetate-acrylate copolymer resin, acrylate-ethylene copolymer resin, and vinyl acetate-ethylene-acrylate copolymer resin with a glass transition temperature of below -5°C and a number average molecular weight of 10000 to 1000000; the inorganic filler includes at least one of inorganic insulating oxides, inorganic insulating nitrides, inorganic insulating carbides, silicates, aluminosilicates, carbonates, and molecular sieves, and optionally, the inorganic filler includes at least one of two-dimensional inorganic layered silicates and two-dimensional inorganic molecular sieves.

In the present application, the fluorine-free insulating slurry can be prepared according to methods known in the art. For example, the fluorine-free insulating slurry can be obtained by uniformly mixing the first resin, the second resin, the inorganic filler, and the organic solvent. The order of adding the materials is not particularly limited. For example, the inorganic filler is first added to the organic solvent and mixed uniformly, and then the first resin and the second resin are added to obtain the fluorine-free insulating slurry; or alternatively, the first resin and the second resin are added into the organic solvent, and then the inorganic filler is added to obtain the fluorine-free insulating slurry. The first resin and the second resin may be added simultaneously or separately; the organic solvent may be added at one time or in batches.

In some embodiments, the fluorine-free insulating slurry can be prepared according to the following steps: S101, dispersing the organic solvent and the inorganic filler uniformly to obtain a slurry; S102, adding the first resin and the second resin to the obtained slurry with dispersing, and filtering the uniformly dispersed mixture with a 100-mesh to 200-mesh filter screen to obtain the fluorine-free insulating slurry. In S101, the dispersion linear velocity is 20 m/s to 100 m/s, and the dispersion time is 15 min to 120 min. In S102, the dispersion linear velocity is 20 m/s to 100 m/s, and the dispersion time is 120 min to 480 min. In some other embodiments, the fluorine-free insulating slurry can be prepared according to the following steps: S201, dispersing the organic solvent, the first resin and the second resin uniformly to obtain a slurry; S202, adding the inorganic filler to the obtained slurry with dispersing, and filtering the uniformly dispersed mixture with a 100-mesh to 200-mesh filter screen to obtain the fluorine-free insulating slurry. In S201, the dispersion linear velocity is 20 m/s to 100 m/s, and the dispersion time is 15 min to 120 min. In S202, the dispersion linear velocity is 20 m/s to 100 m/s, and the dispersion time is 120 min to 480 min.

In the present application, the glass transition temperature of resin has a meaning well-known in the art and can be measured by instruments and methods known in the art. For example, it can be measured with reference to GB/T 29611-2013 "Raw Rubber - Determination of Glass Transition Temperature - Differential Scanning Calorimetry (DSC)" using the DSC-3 type differential scanning calorimeter of Mettler-Toledo.

In the present application, the number average molecular weight of resin has a meaning well-known in the art and can be measured by instruments and methods known in the art. For example, it can be measured by gel permeation chromatography (GPC) using the Agilent 1290 Infinity II GPC system.

In the present application, the viscosity of the slurry has a meaning well-known in the art, and can be tested by instruments and methods known in the art. For example, it can be measured by referring to GB/T 2794-2013 "Determination of Adhesive Viscosity - Single Cylinder Rotational Viscometer Method".

In the present application, the volume average particle size Dv50 of the inorganic filler has a meaning well-known in the art, which represents the particle size corresponding to the cumulative volume distribution percentage reaching 50%, and can be measured by instruments and methods known in the art. For example, referring to GB/T 19077-2016 Particle Size Analysis - Laser Diffraction Methods, it can be conveniently determined by using a laser particle size analyzer, such as the Mastersizer 2000E laser particle size analyzer of Malvern Instruments Ltd., UK.

In the present application, the diameter-thickness ratio of a material has a meaning well-known in the art, and can be tested by instruments and methods known in the art. For example, it can be measured with reference to JC/T 2063-2011 "Method for Determination of Diameter-thickness Ratio of Mica Powder".

### Positive electrode sheet

A second aspect of the embodiment of the present application provides a positive electrode sheet, comprising a positive electrode current collector, a positive electrode active material layer, and a fluorine-free insulating coating, wherein the positive electrode active material layer is located on at least part of the surface of the positive electrode current collector, and the fluorine-free insulating coating is located on the surface of the positive electrode current collector and adjoins the edge of the positive electrode active material layer, and the fluorine-free insulating coating is a layer formed by drying the fluorine-free insulating slurry according to any embodiment of the first aspect of the embodiment of the present application.

The positive electrode sheet of the present application is capable of reducing the probability of direct contact between the negative electrode active material layer and the positive electrode current collector, and ensure that the secondary battery has high safety performance. The positive electrode sheet of the present application also has good processability, and is not easy to break when wound up.

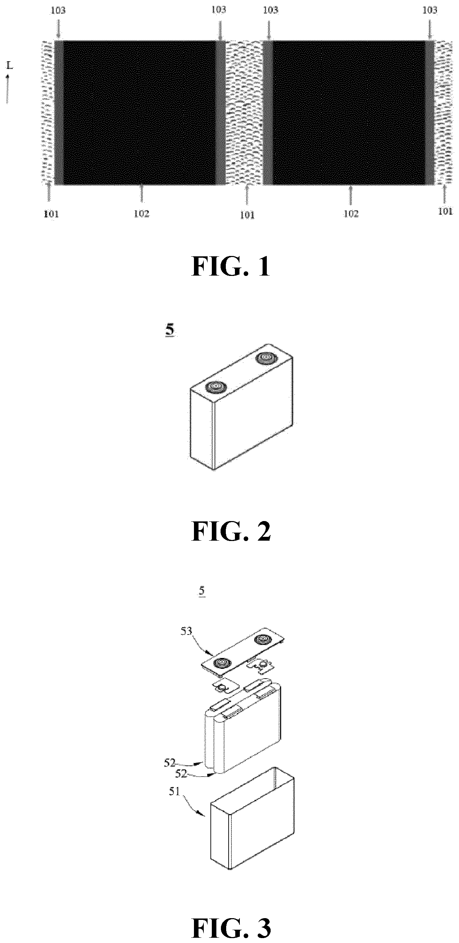

In some embodiments, the fluorine-free insulating coating is located on one or both sides of the positive electrode active material layer along its length direction. Optionally, the fluorine-free insulating coating is located on both sides of the positive electrode active material layer along its length direction. Fig. 1 is a schematic diagram of an embodiment of a positive electrode sheet according to the present application. As shown in Fig. 1, the positive electrode sheet includes a positive electrode current collector 101, a positive electrode active material layer 102 and a fluorine-free insulating coating 103, and the fluorine-free insulating coating 103 is located on both sides of the positive electrode active material layer 102 along the length direction L, but the present application is not limited thereto.

The thickness of the fluorine-free insulating coating is not particularly limited in the present application, and can be adjusted according to actual needs. In some embodiments, the thickness of the fluorine-free insulating coating is 5 µm to 100 µm.

The width of the fluorine-free insulating coating is not particularly limited in the present application, and can be adjusted according to actual needs. In some embodiments, the width of the fluorine-free insulating coating is 0.1 mm to 15 mm.

In some embodiments, the positive electrode current collector has two opposite surfaces in the direction of its own thickness, and the positive electrode active material layer is provided on either or both of the two opposite surfaces of the positive electrode current collector.

In some embodiments, the positive electrode current collector has two opposite surfaces in the direction of its own thickness, and the fluorine-free insulating coating is provided on either or both of the two opposite surfaces of the positive electrode current collector.

The positive electrode active material layer comprises a positive electrode active material, and the positive electrode active material may be a positive electrode active material known in the art for use in secondary batteries. For example, the positive electrode active material may include at least one of lithium transition metal oxides, olivine-structured lithium-containing phosphates, and modified compounds thereof. Examples of the lithium transition metal oxide may include at least one of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide and modified compounds thereof. Examples of the olivine-structured lithium-containing phosphate may include at least one of lithium iron phosphate, composites of lithium iron phosphate and carbon, lithium manganese phosphate, composites of lithium manganese phosphate and carbon, lithium manganese iron phosphate, composites of lithium manganese iron phosphate and carbon, and modified compounds thereof. The present application is not limited to these materials, and other conventionally known materials that can be used as positive electrode active materials for secondary batteries can also be used. It is possible to use only one of these positive electrode active materials alone, or to use more than two of them in combination. In the present application, the above-mentioned modified compounds of the positive electrode active materials may be obtained by modifying the positive electrode active material by doping, or surface coating.

In some embodiments, the positive electrode active material includes at least one of olivine-structured lithium-containing phosphates, and modified compounds thereof.

In some embodiments, the positive electrode active material layer may further optionally comprise a positive electrode conductive agent. The type of the positive electrode conductive agent is not specifically limited in the present application, and as an example, the positive electrode conductive agent includes at least one of superconducting carbon, conductive graphite, acetylene black, carbon black, Ketjen black, carbon dots, carbon nanotubes, graphene and carbon nanofibers. In some embodiments, based on the total mass of the positive electrode active material layer, the percentage mass content of the positive electrode conductive agent is ≤5%.

In some embodiments, the positive electrode active material layer may further optionally comprise a positive electrode binder. The type of the positive electrode binder is not specifically limited in the present application, and as an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resins. In some embodiments, based on the total mass of the positive electrode active material layer, the percentage mass content of the positive electrode binder is ≤5%.

In some embodiments, the positive electrode current collector can be a metal foil or a composite current collector. As an example of the metal foil, an aluminum foil can be used. The composite current collector may comprise a high molecular material substrate layer and a metal material layer formed on at least one surface of the high molecular material substrate layer. As an example, the metal material may be selected from at least one of aluminum, aluminum alloy, nickel, nickel alloy, titanium, titanium alloy, silver, and silver alloy. As an example, the high molecular material substrate layer may be selected from, for example, polypropylene (PP), polyethylene terephthalate (PET), polybutylene terephthalate (PBT), polystyrene (PS), and polyethylene (PE).

The positive electrode active material layer is usually formed by coating the positive electrode slurry on the positive electrode current collector, followed by drying and cold pressing. The positive electrode slurry is generally formed by dispersing the positive electrode active material, the optional conductive agent, the optional binder and any other components in a solvent and sufficiently stirring the mixture. The solvent may be N-methyl pyrrolidone (NMP), but is not limited thereto.

Methods for preparing the positive electrode sheet of the present application are well-known. In some embodiments, the positive electrode slurry and the fluorine-free insulating slurry according to any embodiment of the first aspect of the embodiment of the present application may be coated on the positive electrode current collector, dried and cold-pressed.

### Secondary battery

A third aspect of the embodiment of the present application provides a secondary battery comprising a positive electrode sheet, a negative electrode sheet, and an electrolyte. During the charging and discharging process of the secondary battery, active ions are intercalated and deintercalated back and forth between the positive and negative electrode sheets, and the electrolyte serves to conduct ions between the positive and negative electrode sheets.

### [Positive electrode sheet]

The positive electrode sheet used in the secondary battery of the present application is the positive electrode sheet according to any embodiment of the second aspect of the embodiment of the present application.

### [Negative electrode sheet]

In some embodiments, the negative electrode sheet comprises a negative electrode current collector and a negative electrode active material layer provided on at least one surface of the negative electrode current collector and comprising a negative electrode active material. For example, the negative electrode current collector has two opposite surfaces in its own thickness direction, and the negative electrode active material layer is provided on either one or both of the two opposite surfaces of the negative electrode current collector.

The negative electrode active material may be a negative electrode active material known in the art for use in secondary batteries. As an example, the negative electrode active material may include, but is not limited to, at least one of natural graphite, artificial graphite, soft carbon, hard carbon, silicon-based material, tin-based material, and lithium titanate. The silicon-based material may include at least one of elemental silicon, silicon oxide, silicon-carbon composite, silicon-nitrogen composite, and silicon alloy. The tin-based material may include at least one of elemental tin, tin oxide, and tin alloy. The present application is not limited to these materials, and other conventionally known materials that can be used as negative electrode active materials for secondary batteries can also be used. It is possible to use only one of these negative electrode active materials alone, or to use more than two of them in combination.

In some embodiments, the negative electrode active material layer may further optionally comprise a negative electrode conductive agent. The type of the negative electrode conductive agent is not specifically limited in the present application, and as an example, the negative electrode conductive agent may include at least one of superconducting carbon, conductive graphite, acetylene black, carbon black, Ketjen black, carbon dots, carbon nanotubes, graphene and carbon nanofibers. In some embodiments, based on the total mass of the negative electrode active material layer, the percentage mass content of the negative electrode conductive agent is ≤5%.

In some embodiments, the negative electrode active material layer may further optionally comprise a negative electrode binder. The type of the negative electrode binder is not specifically limited in the present application, and as an example, the negative electrode binder may include at least one of styrene butadiene rubber (SBR), water-soluble unsaturated resin SR-1B, water-based acrylic resin (such as polyacrylic acid (PAA), polymethacrylic acid (PMAA), and sodium polyacrylate (PAAS)), polyacrylamide (PAM), polyvinyl alcohol (PVA), sodium alginate (SA) and carboxymethyl chitosan (CMCS). In some embodiments, based on the total mass of the negative electrode active material layer, the percentage mass content of the negative electrode binder is ≤5%.

In some embodiments, the negative electrode active material layer may further optionally comprise other auxiliaries. As an example, the other auxiliaries may include thickeners, e. g., sodium carboxymethyl cellulose (CMC-Na), PTC thermistor materials and the like. In some embodiments, based on the total mass of the negative electrode active material layer, the percentage mass content of the other auxiliaries is ≤2%.

In some embodiments, the negative electrode current collector can be a metal foil or a composite current collector. As an example of the metal foil, a copper foil can be used. The composite current collector may comprise a high molecular material substrate layer and a metal material layer formed on at least one surface of the high molecular material substrate layer. As an example, the metal material may be selected from at least one of copper, copper alloy, nickel, nickel alloy, titanium, titanium alloy, silver, and silver alloy. As an example, the high molecular material substrate layer may be selected from, for example, polypropylene (PP), polyethylene terephthalate (PET), polybutylene terephthalate (PBT), polystyrene (PS), and polyethylene (PE).

The negative electrode active material layer is usually formed by coating the negative electrode slurry on the negative electrode current collector, followed by drying and cold pressing. The negative electrode slurry is generally formed by dispersing the negative electrode active material, the optional conductive agent, the optional binder, and other optional auxiliaries in a solvent and sufficiently stirring the mixture. The solvent may be N-methyl pyrrolidone (NMP) or deionized water, but is not limited thereto.

The negative electrode sheet does not exclude other additional functional layers other than the negative electrode active material layer. For example, in some embodiments, the negative electrode sheet of the present application further comprises a conductive primer coating (e.g., composed of a conductive agent and a binder) sandwiched between the negative electrode current collector and the negative electrode active material layer and arranged on the surface of the negative electrode current collector. In some other embodiments, the negative electrode sheet of the present application further comprises a protective layer covering the surface of the negative electrode active material layer.

### [Electrolyte]

The type of the electrolyte is not particularly limited in the present application, and can be selected according to requirements. For example, the electrolyte may be selected from at least one of solid electrolyte and liquid electrolyte (i.e., electrolyte solution).

In some embodiments, the electrolyte solution is employed as the electrolyte, and the electrolyte solution comprises an electrolyte salt and a solvent.

The type of the electrolyte salt is not specifically limited, and may be selected based on actual requirements. In some embodiments, as an example, the electrolyte salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

The type of the solvent is not particularly limited and may be selected based on actual requirements. In some embodiments, as an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethyl sulfonyl ethane (ESE).

In some embodiments, the electrolyte solution further optionally comprises an additive. For example, the additive may include a negative electrode film-forming additive, or may include a positive electrode film-forming additive, and may further include an additive capable of improving certain properties of the battery, such as an additive for improving the overcharging performance of the battery, an additive for improving the high temperature performance of the battery, and an additive for improving the low temperature power performance of the battery, etc.

### [Separator]

The secondary battery using an electrolyte solution and some secondary batteries using a solid electrolyte further comprises a separator. The separator is provided between the positive electrode sheet and the negative electrode sheet, and mainly functions to prevent a short circuit between the positive electrode and the negative electrode while allowing active ions to pass through. The type of the separator is not particularly limited in the present application, and any well-known separator with a porous structure having good chemical stability and mechanical stability may be selected.

In some embodiments, the material of the separator may include at least one of glass fiber, non-woven cloth, polyethylene, polypropylene, and polyvinylidene fluoride. The separator may be a single-layer film or a multi-layer composite film. When the separator is a multi-layer composite film, the materials of the layers may be the same or different.

In some embodiments, the positive electrode sheet, the separator and the negative electrode sheet can be made into an electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard shell, e.g., a hard plastic shell, an aluminum shell, and a steel shell. The outer package of the secondary battery can also be a soft package, such as a pouch soft package. The material of the soft package can be plastic, such as at least one of polypropylene (PP), polybutylene terephthalate (PBT), polybutylene succinate (PBS) and the like.

The present application has no particular limitation on the shape of the secondary battery, which can be cylindrical, square or any other shape. For example, Fig. 2 shows a secondary battery 5 with a square structure as an example.

In some embodiments, referring to Fig. 3, the outer package can include a case 51 and a cover plate 53. Here, the case 51 may include a bottom plate and a side plate connected to the bottom plate, with the bottom plate and the side plate enclosing to form an accommodating cavity. The case 51 has an opening that communicates with the accommodating cavity, and the cover plate 53 is used to cover the opening to close the accommodating cavity. The positive electrode sheet, the negative electrode sheet, and the separator may be formed into an electrode assembly 52 by a winding process or a lamination process. The electrode assembly 52 is encapsulated within the accommodating cavity. The electrolyte solution impregnates the electrode assembly 52. The number of electrode assemblies 52 contained in the secondary battery 5 can be one or more, and can be adjusted according to requirements.

The structure and preparation method of the secondary battery according to the present application are well known. In some embodiments, the positive electrode sheet, the separator, the negative electrode sheet and the electrolyte solution can be assembled into a secondary battery. As an example, the positive electrode sheet, the separator and the negative electrode sheet can be made into an electrode assembly by a winding process or a lamination process; the electrode assembly is placed in an outer package, oven-dried and poured with the electrolyte solution, and subjected to vacuum encapsulating, standing, formation, shaping and other procedures to obtain a secondary battery.

In some embodiments of the present application, the secondary battery of the present application can be assembled into a battery module, the number of secondary batteries included in the battery module can be multiple, and the specific number can be adjusted according to the application and capacity of the battery module.

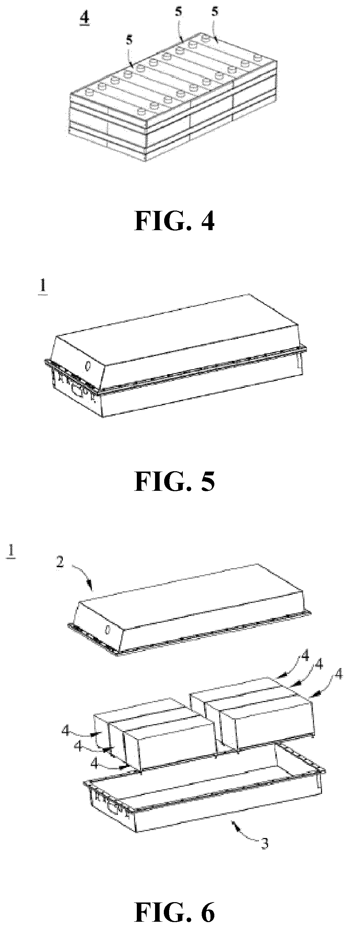

Fig. 4 is a schematic diagram of a battery module 4 as an example. As shown in Fig. 4, in the battery module 4, a plurality of secondary batteries 5 may be sequentially arranged along the length direction of the battery module 4. Of course, they can be arranged in any other way. The plurality of secondary batteries 5 may further be fixed by fasteners.

Optionally, the battery module 4 can further include a shell having an accommodating space, in which the plurality of secondary batteries 5 are accommodated.

In some embodiments, the aforementioned battery modules can further be assembled into a battery pack, and the number of battery modules included in the battery pack can be adjusted according to the application and capacity of the battery pack.

Figs. 5 and 6 are schematic diagrams of a battery pack 1 as an example. As shown in Figs. 5 and 6, the battery pack 1 may include a battery box and a plurality of battery modules 4 disposed in the battery box. The battery box comprises an upper box body 2 and a lower box body 3, wherein the upper box body 2 is used to cover the lower box body 3 to form an enclosed space for accommodating the battery modules 4. The plurality of battery modules 4 may be arranged in the battery box in any manner.

### Electrical apparatus

The embodiment of the present application further provides an electrical apparatus comprising at least one of the secondary batteries, the battery module, or the battery pack of the present application. The secondary battery, battery module, or battery pack may be used as a power source for the electrical apparatus, and may also be used as an energy storage unit for the electrical apparatus. The electrical apparatus may be, but is not limited to, a mobile device (such as a mobile phone, a laptop), an electric vehicle (such as an all-electric vehicle, a hybrid electric vehicle, a plug-in hybrid electric vehicle, an electric bicycle, an electric scooter, an electric golf cart, an electric truck), an electric train, a ship, a satellite, an energy storage system, etc.

For the electrical apparatus, the secondary battery, the battery module, or the battery pack can be selected according to the use requirements of the electrical apparatus.

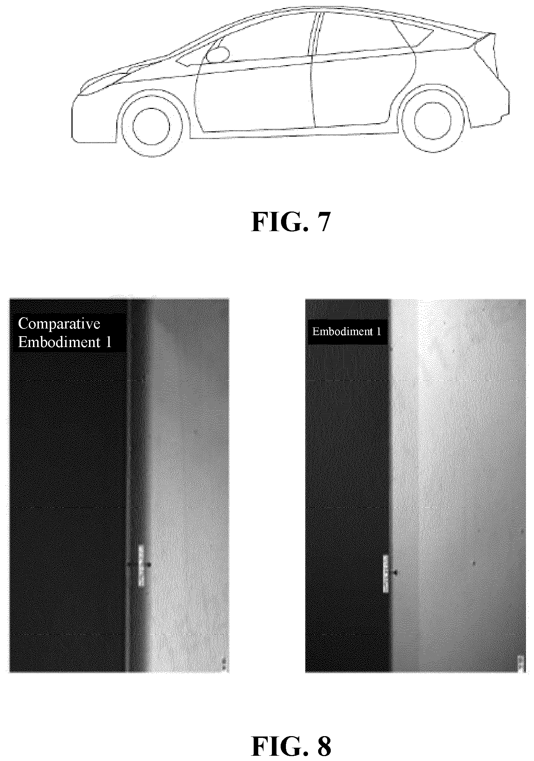

Fig. 7 is a schematic diagram of an electrical apparatus as an example. The electrical apparatus is an all-electric vehicle, a hybrid electric vehicle or a plug-in hybrid electric vehicle, and the like. In order to meet the requirements of the electrical apparatus for high power and high energy density, a battery pack or a battery module may be used.

As another example, the electrical apparatus may be a mobile phone, a tablet, a laptop, etc. The electrical apparatus is generally required to be light and thin, and can use a secondary battery as a power source.

### Embodiments

The following embodiments describe the disclosure of the present application in more detail and are provided for illustrative purposes only, as various modifications and changes within the scope of the disclosure of the present application will be apparent to those skilled in the art. Unless otherwise stated, all parts, percentages, and ratios reported in the following embodiments are based on mass, all reagents used in the embodiments are either commercially available or synthesized according to conventional methods, and can be directly used without further processing, and all the instruments used in the embodiments are commercially available.

### Embodiment 1

### Preparation of fluorine-free insulating slurry

The first resin acrylamide-acrylonitrile copolymer with a number average molecular weight of 300000, Tg of 120°C, and a liquid absorbency in a standard electrolyte solution of 5% and a second resin polybutyl acrylate with a number average molecular weight of 250000 and Tg of -55°C were sequentially added to the organic solvent NMP with stirring, and dispersed at a linear speed of 22 m/s for 60 min. With dispersing, boehmite with a volume average particle size Dv50 of 2 µm was further added, the dispersion linear speed being 20 m/ s, and the dispersion time being 180 min. The dispersion was filtered using a 150-mesh filter screen to obtain a fluorine-free insulating slurry. Based on the total mass of the fluorine-free insulating slurry, the percentage mass content w1 of the first resin is 1.25%, the percentage mass content w2 of the second resin is 3.75%, the percentage mass content w3 of the inorganic filler is 20%, and the percentage mass content w4 of the organic solvent is 75%.

### Preparation of positive electrode sheet

The positive electrode active material lithium iron phosphate, the conductive agent carbon black (Super P), and the binder polyvinylidene fluoride (PVDF) in a mass ratio of 97:1:2 were fully stirred and mixed in an appropriate amount of solvent NMP to form a uniform positive electrode slurry. The positive electrode slurry and the above-mentioned fluorine-free insulating slurry were uniformly coated on the surface of the positive electrode current collector aluminum foil at the same coating speed in a manner as shown in Fig. 1, and dried (until the content of NMP in the positive electrode sheet was < 0.3%), cold pressed to obtain the positive electrode sheet. The coating weight of the positive electrode slurry is 360 mg/1540.25 mm², the coating width of the fluorine-free insulating slurry is 10 mm, and the coating speed is 70 m/min.

### Preparation of negative electrode sheet

The negative electrode active materials graphite, binder styrene-butadiene rubber (SBR), thickener sodium carboxymethyl cellulose (CMC-Na), and conductive agent carbon black (Super P) in a mass ratio of 96.2:1.8: 1.2:0.8 were dissolved in an appropriate amount of the solvent deionized water, sufficiently stirred and mixed to form a uniform negative electrode slurry; the negative electrode slurry was uniformly coated on the surface of the negative electrode current collector copper foil, and then dried, and cold pressed to obtain the negative electrode sheet.

### Preparation of electrolyte solution

Ethylene carbonate (EC), ethyl methyl carbonate (EMC), and dimethyl carbonate (DMC) were mixed in a volume ratio of 1:1:1 to obtain an organic solvent, and then fully dried LiPF₆ was dissolved in the above organic solvent to obtain an electrolyte solution with 1 mol/L LiPF₆.

### Preparation of separator

A porous polyethylene film was used as the separator.

### Preparation of secondary battery

The positive electrode sheet, the separator and the negative electrode sheet were stacked in order and wound up to obtain an electrode assembly; the electrode assembly was placed in an outer package, dried and poured with the electrolyte solution, and subjected to vacuum encapsulating, standing, formation, shaping and other procedures to obtain the secondary battery.

### Embodiments 2-18 and Comparative embodiments 1-4

The preparation method of the secondary battery is similar to that of Embodiment 1, except that the composition of the fluorine-free insulating slurry is different, and the specific parameters are shown in Table 1. Specifically, the first resin and the second resin used in the embodiments and comparative embodiments are abbreviated as follows: acrylamide-acrylonitrile copolymer, A1, purchased from Zeon Co., Ltd., Japan; polyimide, A2, purchased from Wuhan IMIDE New Material Technology Co., Ltd.; polyamic acid, A3, purchased from Wuhan IMIDE New Material Technology Co., Ltd.; polyvinylidene fluoride, trademark Kynar^{®} HSV 900, A4, purchased from Arkema; poly-butyl acrylate, B1; vinyl acetate-ethylene copolymer, B2; hydrogenated nitrile-butadiene rubber, B3; hydrogenated natural rubber, B4; hydrogenated styrene-ethylene-butadiene-styrene copolymer, B5; poly-butyl methacrylate, B6.

### Tests

### (1) Liquid absorbency test

Ethylene carbonate (EC), ethyl methyl carbonate (EMC), and dimethyl carbonate (DMC) were mixed in a volume ratio of 1:1:1 to obtain an organic solvent, and then fully dried LiPF₆ was dissolved in the above organic solvent to obtain a standard electrolyte solution with 1 mol/L LiPF₆.

A first resin sample with a length x width x thickness of 20 mm x 10 mm x 1 mm was taken and soaked in the above standard electrolyte solution at 25°C and standard atmospheric pressure for 168 h, and then taken out. The surface of the sample was cleaned with a dust-free paper, and then weighed quickly. The liquid absorbency in a standard electrolyte solution of the first resin was calculated according to the formula of liquid absorbency =(m₂-m₁)/m₁×100%. m₁ represents the mass of the first resin sample before soaking, and m₂ represents the mass of the first resin sample after soaking.

### (2) Test of viscosity of fluorine-free insulating slurry

The viscosity of the obtained fluorine-free insulating slurry was measured with reference to GB/T 2794-2013 "Determination of Adhesive Viscosity - Single Cylinder Rotational Viscometer Method". The test was conducted at a temperature of 25°C using the Brookfield DVS+ rotational viscometer from Brookfield, USA.

### (3) Test of surface tension of fluorine-free insulating slurry

The surface tension of the obtained fluorine-free insulating slurry at 25°C was measured by using the DCAT9T surface tension tester of Dataphysics, Germany.

### (4) Analysis of results of high-speed coating of fluorine-free insulating slurry

The positive electrode sheets corresponding to the embodiments and the comparative embodiments were each measured for the blurring width (i.e., the maximum width) of the fusion zone on the positive electrode sheet through a CCD visual inspection device. Among them, the coating speeds of the positive electrode slurry and the fluorine-free insulating slurry of Comparative Embodiment 1 are both 36 m/min, the coating speeds of the positive electrode slurry and the fluorine-free insulating slurry of Comparative Embodiment 2 are both 40 m/min, and the coating speeds of the positive electrode slurries and the fluorine-free insulating slurries of Embodiments 1 to 18 and Comparative Embodiments 3 to 4 are all 70 m/min.

### (5) Test of electrolyte solution resistance of fluorine-free insulating coating

The positive electrode sheets corresponding to the embodiments and the comparative embodiments were each soaked in the above-mentioned standard electrolyte solution for 168 h at ambient temperature, then the standard electrolyte solution was removed in the glove box, and the fluorine-free insulating coating was repeatedly wiped with a cotton swab until the fluorine-free insulating coating fell off. The higher the number of times of wiping with the cotton swab, the better the electrolyte solution resistance of the fluorine-free insulating coating.

### (6) Test of adhesion of fluorine-free insulating coating

At 60°C, the secondary batteries prepared in the embodiments and the comparative embodiments were each charged to 3.65 V at a constant current of 1C, then charged at a constant voltage of 3.65 V until the current was ≤0.05 mA; the batteries were allowed to stand still for 5 min, and then discharged to 2.50 V at a constant current of 1C, which is one charge and discharge cycle. After the secondary battery was tested for 500 cycles of charging and discharging according to the above method, the secondary battery was disassembled to observe whether the fluorine-free insulating coating fell off.

### (7) Test of processability of positive electrode sheet

The processability of the positive electrode sheet is characterized by the winding breakage rate of the positive electrode sheet. The lower the winding breakage rate of the positive electrode sheet, the better the processability. The breakage rate refers to the number of breaks corresponding to one roll of the positive electrode sheet. Specifically, the processability of the positive electrode sheet is divided into three grades: excellent (average breakage rate is less than 0.24 times/roll), medium (average breakage rate is not less than 0.24 times/roll and not more than 0.4 times/roll), and poor (average breakage rate is more than 0.4 times/roll).

The performance test results for Embodiments 1 to 18 and Comparative Embodiments 1 to 4 are shown in Table 2.

Fig. 8 shows the comparison of the results of the fluorine-free insulating slurry prepared in Embodiment 1 and Comparative Embodiment 1 under high-speed coating. As shown in Fig. 8, the technical solution of the fluorine-free insulating slurry of the present application is capable of effectively reducing the blurring width of the fusion zone, fundamentally solving the problem of restricted increase of coating speed. From the test results in Table 2, it can be seen that the blurring width of the fusion zone of the fluorine-free insulating slurry prepared in Embodiment 1 is only 0.2 mm at a coating speed of 70 m/min, while for the fluorine-containing insulating slurry prepared in Comparative Embodiment 1, the blurring width of the fusion zone reaches 2.2 mm at a coating speed of 36 m/min.

It can also be seen from the test results in Table 2 that the fluorine-free insulating coating prepared from the fluorine-free insulating slurry of the present application is capable of simultaneously having high adhesion, high toughness and excellent electrolyte solution resistance, while the positive electrode sheet also has good processability. The fluorine-free insulating slurry of Comparative Embodiment 2 only uses the first resin, so the prepared fluorine-free insulating coating has high brittleness, the positive electrode sheet has poor processability and is easily broken when wound up; also, due to the high brittleness, the fluorine-free insulating coating has relatively concentrated internal stress distribution, resulting in poor adhesion after long-term soaking in the electrolyte solution, so that the fluorine-free insulating coating easily falls off the positive electrode current collector. The fluorine-free insulating slurry of Comparative Embodiment 3 only uses the second resin, so the prepared fluorine-free insulating coating has poor electrolyte solution resistance and adhesion, and the fluorine-free insulating coating easily falls off the positive electrode current collector after long-term use of the secondary battery. The fluorine-free insulating slurry of Comparative Embodiment 4 uses a combination of the first resin and the second resin, but the second resin has a high glass transition temperature and it is in a glass state at ambient temperature. As a result, the positive electrode sheet still has poor processability and is easily broken when wound up. Also, the second resin cannot improve the brittleness of the first resin, so the prepared fluorine-free insulating coating still has high brittleness and relatively concentrated internal stress distribution, the adhesion after long-term soaking in the electrolyte solution deteriorates, and the fluorine-free insulating coating easily falls off the positive electrode current collector.

It can also be seen from the test results in Table 2 that by reasonably adjusting the percentage mass contents of the first resin, the second resin, the inorganic filler and the organic solvent in the fluorine-free insulating slurry to realize that w1 is 1% to 5 %, w2 is 2% to 10%, w3 is 15% to 30%, w4 is 55% to 82%, the positive electrode sheet can have lower blurring width of the fusion zone and excellent processability, and the fluorine-free insulating coating can have higher adhesion and better electrolyte solution resistance. The percentage mass content w1 of the first resin in the fluorine-free insulating slurry prepared in Embodiment 7 is less than 1%, and the adhesion and electrolyte solution resistance of the fluorine-free insulating coating are slightly poor. The percentage mass content w1 of the first resin in the fluorine-free insulating slurry prepared in Embodiment 8 is greater than 5%, and the fluorine-free insulating coating can have high adhesion and excellent electrolyte solution resistance, but the processability of the positive electrode sheet is slightly poor. The percentage mass content w2 of the second resin in the fluorine-free insulating slurry prepared in Embodiment 9 is less than 2%. The fluorine-free insulating coating can have high adhesion and excellent electrolyte solution resistance, but the second resin cannot satisfactorily improve the brittleness of the first resin, resulting in slightly poor processability of the positive electrode sheet. The percentage mass content w2 of the second resin in the fluorine-free insulating slurry prepared in Embodiment 10 is greater than 10%, the positive electrode sheet has excellent processability, but the adhesion and electrolyte solution resistance of the fluorine-free insulating coating are slightly poor.

It should be noted that the present application is not limited to the embodiments above. The above embodiments are merely exemplary, and embodiments having substantially the same technical idea and the same effects within the scope of the technical solutions of the present application are all included in the technical scope of the present application. In addition, without departing from the scope of the subject matter of the present application, various modifications applied to the embodiments that can be conceived by those skilled in the art, and other modes constructed by combining some of the constituent elements of the embodiments are also included in the scope of the present application.

**Table 1**

| Serial No. | First resin | | | | | Second resin | | | | Inorganic filler | | | Organic solvent | | w1/w 2 | (w1+w2) / w3 |
|---|---|---|---|---|---|---|---|---|---|---|---|---|---|---|---|---|
| | Typ e | Liquid absorbenc y in a standard electrolyte solution (%) | Tg (°C ) | Number average molecula r weight | w1 (%) | Typ e | Tg (°C ) | Number average molecula r weight | w2 (%) | Type | Dv5 0 (µm) | w3 (%) | Type | w4 (%) | | |
| Embodimen t 1 | A1 | 5 | 120 | 300000 | 1.2 5 | B1 | -55 | 250000 | 3.7 5 | Boehmit e | 2 | 20 | NM P | 75 | 0.33 | 0.25 |
| Embodimen t2 | A1 | 5 | 120 | 300000 | 1 | B1 | -55 | 250000 | 4 | Boehmit e | 2 | 20 | NM P | 75 | 0.25 | 0.25 |
| Embodimen t3 | A1 | 5 | 120 | 300000 | 3 | B1 | -55 | 250000 | 2 | Boehmit e | 2 | 20 | NM P | 75 | 1.50 | 0.25 |
| Embodimen t4 | A1 | 5 | 120 | 300000 | 5 | B1 | -55 | 250000 | 5 | Boehmit e | 2 | 15 | NM P | 75 | 1.00 | 0.67 |
| Embodimen t5 | A1 | 5 | 120 | 300000 | 2 | B1 | -55 | 250000 | 10 | Boehmit e | 2 | 25 | NM P | 63 | 0.20 | 0.48 |
| Embodimen t6 | A1 | 5 | 120 | 300000 | 2 | B1 | -55 | 250000 | 8 | Boehmit e | 2 | 30 | NM P | 60 | 0.25 | 0.33 |
| Embodimen t7 | A1 | 5 | 120 | 300000 | 0.5 | B1 | -55 | 250000 | 5.5 | Boehmit e | 2 | 19 | NM P | 75 | 0.09 | 0.32 |
| Embodimen t8 | A1 | 5 | 120 | 300000 | 6 | B1 | -55 | 250000 | 4 | Boehmit e | 2 | 15 | NM P | 75 | 1.50 | 0.67 |
| Embodimen t9 | A1 | 5 | 120 | 300000 | 1.5 | B1 | -55 | 250000 | 1 | Boehmit e | 2 | 22. 5 | NM P | 75 | 1.50 | 0.11 |
| Embodimen t 10 | A1 | 5 | 120 | 300000 | 1.5 | B1 | -55 | 250000 | 11 | Boehmit e | 2 | 15 | NM P | 72. 5 | 0.14 | 0.83 |
| Embodimen t 11 | A2 | 4 | 280 | 20000 | 1.2 5 | B2 | -45 | 300000 | 3.7 5 | Boehmit e | 2 | 20 | NM P | 75 | 0.33 | 0.25 |
| Embodimen t 12 | A2 | 3 | 290 | 100000 | 1.2 5 | B3 | -40 | 700000 | 3.7 5 | Boehmit e | 2 | 20 | NM P | 75 | 0.33 | 0.25 |
| Embodimen t 13 | A1 | 5 | 120 | 300000 | 1.2 5 | B4 | -60 | 300000 | 3.7 5 | Boehmit e | 2 | 20 | NM P | 75 | 0.33 | 0.25 |
| Embodimen t 14 | A1 | 5 | 120 | 300000 | 1.2 5 | B5 | -32 | 200000 | 3.7 5 | Boehmit e | 2 | 20 | NM P | 75 | 0.33 | 0.25 |
| Embodimen t 15 | A1 | 5 | 120 | 300000 | 1.2 5 | B3 | -40 | 700000 | 3.7 5 | Talc powder | 2 | 20 | NM P | 75 | 0.33 | 0.25 |
| Embodimen t 16 | A1 | 5 | 120 | 300000 | 1.2 5 | B3 | -40 | 700000 | 3.7 5 | Alumina | 2 | 20 | NM P | 75 | 0.33 | 0.25 |
| Embodimen t 17 | A3 | 8 | 130 | 60000 | 1.2 5 | B3 | -40 | 700000 | 3.7 5 | Boehmit e | 2 | 20 | NM P | 75 | 0.33 | 0.25 |
| Embodimen t 18 | A3 | 8 | 130 | 60000 | 1.2 5 | B3 | -40 | 700000 | 3.7 5 | Mica powder | 2 | 20 | NM P | 75 | 0.33 | 0.25 |
| Comparativ e Embodimen t 1 | A4 | 15 | -40 | 900000 | 5 | / | / | / | / | Boehmit e | 2 | 20 | NM P | 75 | / | / |
| Comparativ e Embodimen t2 | A1 | 5 | 120 | 300000 | 5 | / | / | / | / | Talc powder | 2 | 20 | NM P | 75 | / | / |
| Comparativ e Embodimen t3 | / | / | / | / | / | B3 | -40 | 700000 | 5 | Talc powder | 2 | 20 | NM P | 75 | / | / |
| Comparativ e Embodimen t4 | A1 | 5 | 120 | 300000 | 1.2 5 | B6 | 20 | 160000 | 3.7 5 | Talc powder | 2 | 20 | NM P | 75 | 0.33 | 0.25 |

**Table 2**

| Serial No. | Fluorine-free insulating slurry | | | Fluorine-free insulating coating | | | | Positive electrode sheet processability |
|---|---|---|---|---|---|---|---|---|
| | Appearance | Viscosity (cps) | Surface tension (mN/m) | Coating speed (m/min) | Blurring width of fusion zone (mm) | Wipe resistance (times) | Adhesion | |
| Embodiment 1 | Beige fine liquid | 2800 | 45.2 | 70 | 0.2 | > 10 | Not falling off | Excellent |
| Embodiment 2 | Beige fine liquid | 3000 | 44.8 | 70 | 0.3 | > 10 | Not falling off | Excellent |
| Embodiment 3 | Beige fine liquid | 6000 | 44.3 | 70 | 0.5 | > 10 | Not falling off | Excellent |
| Embodiment 4 | Beige fine liquid | 15000 | 44.7 | 70 | 0.2 | > 10 | Not falling off | Excellent |
| Embodiment 5 | Beige fine liquid | 16000 | 45.4 | 70 | 0.2 | > 10 | Not falling off | Excellent |
| Embodiment 6 | Beige fine liquid | 18000 | 45.5 | 70 | 0.2 | > 10 | Not falling off | Excellent |
| Embodiment 7 | Beige fine liquid | 1800 | 43.4 | 70 | 0.4 | 5 | Falling off | Excellent |
| Embodiment 8 | Beige fine liquid | 18000 | 44.9 | 70 | 0.3 | > 10 | Not falling off | Medium |
| Embodiment 9 | Beige fine liquid | 1200 | 43.3 | 70 | 0.5 | > 10 | Not falling off | Medium |
| Embodiment 10 | Beige fine liquid | 17000 | 44.3 | 70 | 0.5 | 7 | Falling off | Excellent |
| Embodiment 11 | Beige fine liquid | 2000 | 44.8 | 70 | 0.4 | > 10 | Not falling off | Excellent |
| Embodiment 12 | Beige fine liquid | 3500 | 44.9 | 70 | 0.3 | > 10 | Not falling off | Excellent |
| Embodiment 13 | Beige fine liquid | 2900 | 45.3 | 70 | 0.2 | > 10 | Not falling off | Excellent |
| Embodiment 14 | Beige fine liquid | 2600 | 45.2 | 70 | 0.2 | > 10 | Not falling off | Excellent |
| Embodiment 15 | Beige fine liquid | 4300 | 45.4 | 70 | 0.2 | > 10 | Not falling off | Excellent |
| Embodiment 16 | Beige fine liquid | 3600 | 44.9 | 70 | 0.2 | > 10 | Not falling off | Excellent |
| Embodiment 17 | Beige fine liquid | 3000 | 44.7 | 70 | 0.5 | > 10 | Not falling off | Excellent |
| Embodiment 18 | Beige fine liquid | 3500 | 44.8 | 70 | 0.4 | > 10 | Not falling off | Excellent |
| Comparative Embodiment 1 | White fine liquid | 3500 | 41.2 | 36 | 2.2 | 4 | Not falling off | Excellent |
| Comparative Embodiment 2 | Beige fine liquid | 1500 | 44.5 | 40 | 0.2 | 2 | Falling off | Poor |
| Comparative Embodiment 3 | Beige fine liquid | 6000 | 44.6 | 70 | 0.2 | Falling off automatically | Falling off | Excellent |
| Comparative Embodiment 4 | Beige fine liquid | 3500 | 45.3 | 70 | 0.2 | 2 | Falling off | Poor |

## Claims

1. A fluorine-free insulating slurry, comprising a first resin, a second resin, an inorganic filler and an organic solvent, wherein,
the first resin is selected from resins with a glass transition temperature of above 80°C and a liquid absorbency in a standard electrolyte solution of below 15%, and
the second resin is selected from resins with a glass transition temperature of below -5°C.

2. The fluorine-free insulating slurry according to claim 1, wherein,
based on the total mass of the fluorine-free insulating slurry, the percentage mass content w1 of the first resin is 1% to 5%, the percentage mass content w2 of the second resin is 2% to 10%, the percentage mass content w3 of the inorganic filler is 15% to 30%, and the percentage mass content w4 of the organic solvent is 55% to 82%.

3. The fluorine-free insulating slurry according to claim 2, wherein,
w1/w2 is 0.1 to 1.5, optionally 0.2 to 1.0; and/or,
(w1+w2)/w3 is 0.1 to 0.9, optionally 0.2 to 0.7.

4. The fluorine-free insulating slurry according to any one of claims 1 to 3, wherein, the viscosity of the fluorine-free insulating slurry at 25°C is 1000 cps to 20000 cps, optionally 2000 cps to 8000 cps.

5. The fluorine-free insulating slurry according to any one of claims 1 to 4, wherein,
the glass transition temperature of the first resin is 80°C to 350°C; and/or,
the glass transition temperature of the second resin is -60°C to -5°C.

6. The fluorine-free insulating slurry according to any one of claims 1 to 5, wherein,
the number average molecular weight of the first resin is 10000 to 500000; and/or,
the number average molecular weight of the second resin is 10000 to 1000000.

7. The fluorine-free insulating slurry according to any one of claims 1 to 6, wherein,
the first resin is selected from at least one of polyimide resin, polyamideimide resin, polyamic acid resin, polyacrylamide resin, polyacrylonitrile resin, acrylate resin, acrylamide-acrylonitrile copolymer resin and acrylamide-acrylonitrile-acrylate copolymer resin; and/or,
the second resin is selected from at least one of hydrogenated nitrile-butadiene rubber, hydrogenated natural rubber, acrylate resin, hydrogenated styrene-butadiene-styrene copolymer resin, hydrogenated styrene-isoprene-styrene copolymer resin, hydrogenated styrene-ethylenebutylene-styrene copolymer resin, hydrogenated styrene-ethylene-propylene-styrene copolymer resin, hydrogenated styrene-ethylene-butadiene-styrene copolymer resin, vinyl acetate-ethylene copolymer resin, vinyl acetate-acrylate copolymer resin, acrylate-ethylene copolymer resin, and vinyl acetate-ethylene-acrylate copolymer resin.

8. The fluorine-free insulating slurry according to any one of claims 1 to 7, wherein, the inorganic filler includes at least one of inorganic insulating oxides, inorganic insulating nitrides, inorganic insulating carbides, silicates, aluminosilicates, carbonates, and molecular sieves;
optionally, the inorganic insulating oxide includes at least one of alumina, boehumite, titanium dioxide, silicon dioxide, zirconium dioxide, magnesium oxide, calcium oxide, beryllium oxide, and spinel;
optionally, the inorganic insulating nitride includes at least one of boron nitride, silicon nitride, aluminum nitride, and titanium nitride;
optionally, the inorganic insulating carbide includes at least one of boron carbide, silicon carbide, and zirconium carbide;
optionally, the silicate includes at least one of mica powder, fluorophlogopite powder, talc powder, hydrotalcite, hydrotalcite-like, mullite, and montmorillonite;
optionally, the aluminosilicate includes at least one of mullite and orthoclase;
optionally, the carbonate includes at least one of calcium carbonate, magnesium carbonate, calcite, magnesite, dolomite, siderite, rhodochrosite, smithsonite, cerussite, strontianite, and witherite; and
optionally, the molecular sieve includes at least one of X-type, Y-type, MFI-type, MOR-type, MWW-type, SAPO-type, FER-type, and PLS-n-type molecular sieves.

9. The fluorine-free insulating slurry according to claim 8, wherein the silicate includes at least one of mica powder, fluorophlogopite powder, talc powder, hydrotalcite, and hydrotalcite-like; and/or
the molecular sieve includes at least one of MWW-type, SAPO-type, FER-type, and PLS-n-type molecular sieves.

10. The fluorine-free insulating slurry according to any one of claims 1 to 9, wherein, the volume average particle size Dv50 of the inorganic filler is 0.5 µm to 10 µm, optionally 0.5 µm to 5 µm.

11. The fluorine-free insulating slurry according to any one of claims 1 to 10, wherein, the organic solvent includes at least one of N-methylpyrrolidone, triethyl phosphate, N,N-dimethylformamide, N,N-dimethylacetamide, dimethyl sulfoxide, and diethylene glycol.

12. A positive electrode sheet, comprising:
a positive electrode current collector;
a positive electrode active material layer, located on at least part of the surface of the positive electrode current collector; and
a fluorine-free insulating coating, located on the surface of the positive electrode current collector and adjoining the edge of the positive electrode active material layer,
wherein, the fluorine-free insulating coating is a layer formed by drying the fluorine-free insulating slurry according to any one of claims 1 to 11.

13. The positive electrode sheet according to claim 12, wherein the fluorine-free insulating coating is located on both sides of the positive electrode active material layer along its length direction.

14. The positive electrode sheet according to claim 12 or 13, wherein,
the thickness of the fluorine-free insulating coating is 5 µm to 100 µm; and/or,
the width of the fluorine-free insulating coating is 0.1 mm to 15 mm.

15. A secondary battery, comprising the positive electrode sheet according to any one of claims 12 to 14.

16. A battery module, comprising the secondary battery according to claim 15.

17. A battery pack, comprising the secondary battery according to claim 15 or the battery module according to claim 16.

18. An electrical apparatus, comprising at least one of the secondary batteries according to claim 15, the battery module according to claim 16, and the battery pack according to claim 17.
